(19) **Europäisches Patentamt**

**European Patent Office**

**Office européen des brevets**

(11) **EP 1 320 201 A1**

(12) **EUROPEAN PATENT APPLICATION**
published in accordance with Art. 158(3) EPC

(43) Date of publication:
**18.06.2003 Bulletin 2003/25**

(51) Int Cl.[7]: **H04B 7/08**, H04B 7/26

(21) Application number: **01958440.8**

(86) International application number:
**PCT/JP01/07230**

(22) Date of filing: **23.08.2001**

(87) International publication number:
**WO 02/021722 (14.03.2002 Gazette 2002/11)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.09.2000 JP 2000267013**

(71) Applicant: **Sanyo Electric Co., Ltd.**
**Moriguchi-shi, Osaka 570-8677 (JP)**

(72) Inventors:
• **KOIKE, Hirotaka, Sanyo Electric Co., Ltd.**
**Moriguchi-shi, Osaka 570-8677 (JP)**

• **MIYATA, Takeo, Sanyo Electric Co., Ltd.**
**Moriguchi-shi, Osaka 570-8677 (JP)**
• **DOI, Yoshiharu, Sanyo Electric Co., Ltd.**
**Moriguchi-shi, Osaka 570-8677 (JP)**
• **NAKAO, Seigo, Sanyo Electric Co., Ltd.**
**Moriguchi-shi, Osaka 570-8677 (JP)**
• **IWAMI, Masashi, Sanyo Electric Co., Ltd.**
**Moriguchi-shi, Osaka 570-8677 (JP)**
• **KITAKADO, Jun, Sanyo Electric Co., Ltd.**
**Moriguchi-shi, Osaka 570-8677 (JP)**

(74) Representative: **Glawe, Delfs, Moll & Partner**
**Patentanwälte**
**Postfach 26 01 62**
**80058 München (DE)**

(54) **RADIO BASE SYSTEM, SAMPLING ERROR REDUCING METHOD, AND SAMPLING ERROR REDUCING PROGRAM**

(57) On a signal received by an antenna (1, 2), an adaptive array processing is performed by a DSP to obtain an array output. A reception timing control unit (30) shifts sampling timing of a reception signal by an A/D converter (3, 4) while monitoring MSE between the array output and the reference signal, and determines an optimal sampling point (reception position) at which the sampling error is minimized.

F I G. 4

## Description

Technical Field

The present invention relates to a radio base station system, a sampling error reducing method and a sampling error reducing program and, more specifically, to a radio base station system extracting a reception signal from a desired mobile terminal through adaptive array processing, as well as to a sampling error reducing method and a sampling error reducing program, for reducing sampling error in such a radio base station system.

Background Art

In a mobile communication system (for example, Personal Handy Phone System: hereinafter simply referred to as PHS) that is rapidly developing recently, a method has been proposed in which, for communication between a base station and mobile terminals, a reception signal from a desired mobile terminal is extracted through adaptive array processing, in the radio reception system on the base station side.

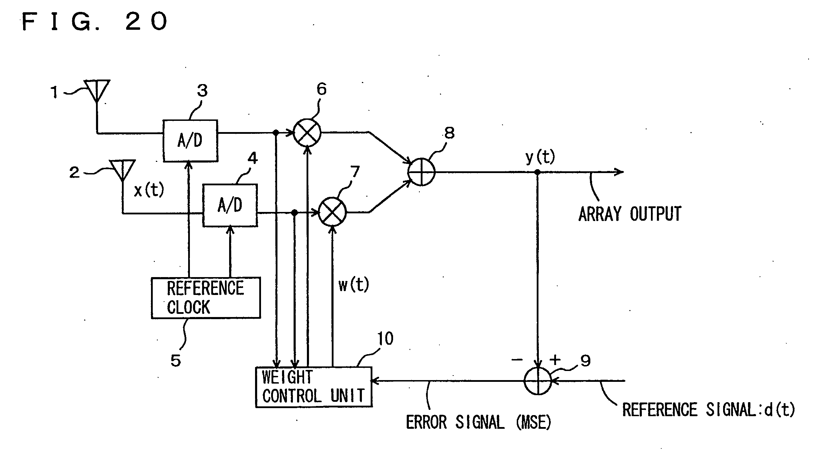

Fig. 20 is a functional block diagram functionally illustrating the adaptive array processing that is carried out in software manner by a digital signal processor (DSP) of a radio reception system on the side of the base station (radio base station system).

Referring to Fig. 20, a reception signal vector X (t) formed by reception signals from mobile terminals received by a plurality of antennas, for example, two antennas 1 and 2 of the radio base station system, is amplified by RF circuits, not shown, and thereafter, converted to digital signals by A/D converters 3 and 4 sampling inputs in accordance with a reference clock supplied at a prescribed timing from a reference clock generator 5.

These digital signals are applied to a DSP (not shown) of the radio base station system, and thereafter, the adaptive array processing is performed in the software manner in accordance with the functional block diagram of Fig. 20.

The adaptive array processing refers to a process of exactly extracting a signal from a desired mobile terminal, by calculating and adaptively controlling a weight vector consisting of reception coefficients (weight) for respective antennas, based on the reception signals.

Returning to Fig. 20, the reception signal vector X (t) sampled by A/D converters 3 and 4 is applied to respective one inputs of multipliers 6 and 7, as well as to a weight control unit 10.

Weight control unit 10 calculates a weight vector W (t) consisting of weights of respective antennas in accordance with an algorithm, which will be described later, applies the calculated result to the respective other inputs of the multipliers 6 and 7, and performs complex multiplication with the reception signal vector X (t) from the corresponding antennas.

By an adder 8, a summation y (t) of the result of multiplications is obtained, which summation y (t) is represented as a complex multiplication summation below:

$$y\,(t) = W\,(t)^{H}X\,(t)$$

Here, W (t)$^{H}$ represents translocation of complex conjugate of the weight vector W (t).

The result y (t) of the complex multiplication summation described above is applied to one input of a subtractor 9, and mean square error (hereinafter referred to as MSE) with a known reference signal d (t) stored in advance in a memory, not shown, of the radio base station system is calculated.

The reference signal d (t) is a known signal common to all the users included in the reception signals from mobile terminals, and in a PHS, for example, a preamble period formed by a known bit string among the reception signals is used.

Weight control unit 10 performs a process for updating weight coefficients so as to decrease the calculated MSE. In the adaptive array processing, the updating (weight learning) of the weight vector is adaptively performed in accordance with the time and variation of propagation path characteristic of the signal radiowaves, removes interfering components and noises from the reception signals X (t), and an array output signal y (t) from a desired mobile terminal is extracted.

In weight control unit 10, updating of the weight vector, that is, weight learning is performed in accordance with minimum mean square error (hereinafter referred to as MMSE) based on MSE, as described above. Specifically, weight control unit 10 uses RLS (Recursive Least Square) algorithm or LMS (Least Mean Squares) algorithm, based on MMSE.

Such technique of adaptive array processing in accordance with MMSE and the RLS algorithm and LMS algorithm in accordance with MMSE are well known as described, for example, in *Adaptive Signal Processing by Array Antenna* (array antenna ni yoru tekio shingo shori), by Nobuyoshi Kikuma (Kagaku Gijitsu Shuppan), *"Chapter 3: MMSE Adaptive Array"* on pp. 35-49. Therefore, detailed description thereof will not be given here.

The configuration shown in Fig. 20 is for calculating only an array output of a mobile terminal of one user. Actually, however, it may be necessary to calculate array outputs of mobile terminals of a plurality of users respectively.

In a radio base station system of a well known PDMA (Path Division Multiple Access) type mobile communication system in which data is transmitted to/from a plurality of mobile terminals by spatially dividing one time slot of one same frequency by adaptive array processing, it is necessary to calculate all the array outputs of a plurality of mobile terminals that can be connected to channels of the same time slot.

Therefore, in order to handle a plurality of mobile terminals, it is necessary to provide the circuit configuration for one user shown in Fig. 20 in plural and in parallel.

Though not shown in Fig. 20, the radio base station system requires a circuit configuration for transmitting externally applied transmission signal for each user to the corresponding mobile terminal.

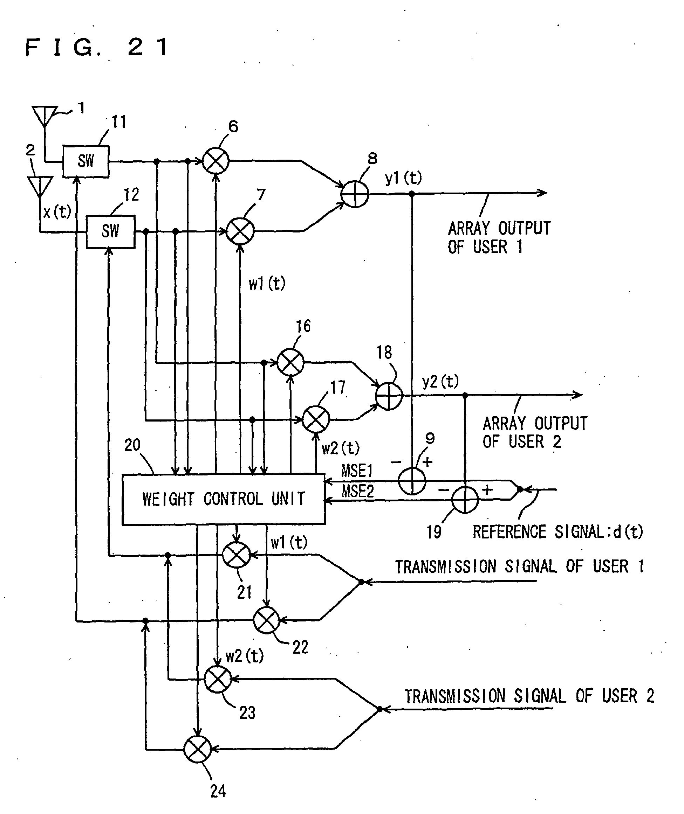

Fig. 21 is a functional block diagram functionally illustrating the process of a radio base station system having the function of transmitting/receiving signals to and from mobile terminals of two persons, as an example of a radio base station system that accommodates a plurality of terminals.

In the configuration shown in Fig. 21, two antennas 1 and 2 are shared, two circuit configurations for reception such as shown in Fig. 20 are arranged parallel to each other, and two circuit configurations for transmission are arranged in parallel.

Referring to Fig. 21, a reception signal vector X (t) from mobile terminals received by antennas 1 and 2 is amplified by an RF circuit, not shown, and thereafter commonly applied to respective one inputs of multipliers 6, 7 and respective one inputs of multipliers 16, 17 through switches 11, 12.

A/D converters 3, 4 and reference clock generator 5 shown in Fig. 20 are also commonly provided for multipliers 6, 7 and multipliers 16, 17 in the succeeding stages of switches 11 and 12 in the configuration of Fig. 21. These are not shown, however, for the simplicity of the figure.

Weight control unit 20 calculates a weight vector W1 (t) for extracting a signal from a mobile terminal of user 1 in accordance with the algorithm described above, applies the result to the respective other inputs of multipliers 6, 7, for complex multiplication with the reception signal vector X (t). Summation y1 (t) of the result of multiplications is obtained by an adder 8, and extracted as an array output signal from mobile terminal of user 1.

Weight control unit 20, on the other hand, calculates a weight vector W2 (t) for extracting a signal from a mobile terminal of user 2 in accordance with the algorithm described above, applies the result to the respective other inputs of multipliers 16 and 17, for complex multiplication with the reception signal vector X (t). Summation y2 (t) of the result of multiplications is obtained by an adder 18, and extracted as an array output signal from mobile terminal of user 2.

Array output y1 (t) is applied to one input of a subtractor 9 to calculate MSE1 with reference signal d (t). Array output y2 (t) is applied to one input of a subtractor 19 to calculate MSE2 with the reference signal d (t).

Weight control unit 20 performs a process for updating weight vectors W1 (t) and W2 (t) to decrease the calculated MSE1 and MSE2.

A transmission signal to user 1 is applied to respective one inputs of multipliers 21 and 22, and a transmission signal to user 2 is applied to respective one inputs of multipliers 23 and 24.

To the respective other inputs of multipliers 21 and 22, a copy of the weight vector W1 (t) calculated based on the reception signal in advance by the weight control unit 20 is applied, and to the respective other inputs of multipliers 23 and 24, a copy of the weight vector W2 (t) calculated based on the reception signal in advance by the weight control unit 20 is applied.

The transmission signals of respective users weighted by these multipliers are synthesized, converted to analog signals by D/A converters, not shown, and transmitted by antennas 1 and 2, through switches 11 and 12.

Switches 11 and 12 are switch-controlled such that at the time of signal reception, signals received by antennas 1 and 2 are applied to multipliers 6, 7, 16 and 17 as well as to weight control unit 20, and at the time of signal transmission, synthesized outputs of multipliers 21, 22, 23 and 24 are applied to antennas 1 and 2.

The signals transmitted by using the same antenna used for reception are weighted, targeting respective users, in the similar manner as the reception signals. Therefore, the transmitted radio wave signals are received by mobile terminals of users 1 and 2 as if they have directivity to respective users 1 and 2.

As described with reference to Figs. 20 and 21, the signals received by antennas 1 and 2 are sampled by A/D converters 3 and 4 at the timing of a reference clock generated by reference clock generator 5. Here, sampling precision of the reception signal is determined by the number of oversampling per 1 symbol of the received signal. Specifically, when sufficient number of oversampling per 1 symbol cannot be obtained, it is possible that sampling of reception signal at the reference phase point of $\pi/4$ sift QPSK modulation fails.

Assume that the sampling precision of the radio base station system is N times oversampling (sampling is performed at N points per 1 symbol, that is, the sampling interval is 1/N symbol), it is possible that the sampling occurs at a position shifted by 1/2N symbol at most, from the reference phase point. Therefore, deviation from the reference phase point would be large, unless N is sufficiently large.

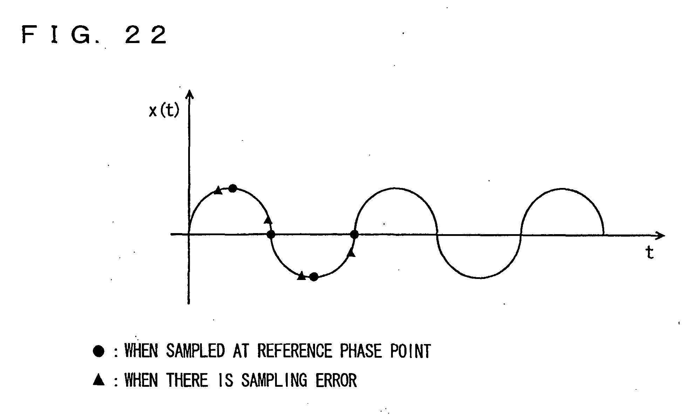

Fig. 22 is a diagram of waveforms representing sampling of the reception signals X (t) at positions deviated from the reference phase point (represented by triangular marks) as compared with the signals sampled at the reference phase points (represented by black circles).

When the reception signals cannot be sampled at the reference phase points as represented by the triangular marks of Fig. 22, that is, when there is a sampling error, the same phenomenon as noise entering the reception signal occurs, degrading characteristics of the reproduction of reception signals.

Therefore, an object of the present invention is to provide a radio base station system, a sampling error reducing method and a sampling error reducing program that ensure sampling at reference phase point, by adjusting the position of reception of the reception signals when a sampling error occurs.

Disclosure of the Invention

The present invention provides a radio base station system transmitting and receiving signals to and from a mobile terminal using a plurality of antennas, including a converting apparatus, an adaptive array processing unit, an error signal calculating unit and a timing control unit. The converting apparatus samples and converts to digital data a signals from the mobile terminal received by the plurality of antennas. The adaptive array processing unit performs an adaptive array processing on the digital data to extract a signal from a desired mobile terminal. The error signal calculating unit calculates an error signal between the extracted signal and a prescribed reference signal. The timing control unit controls timing of sampling at the converting apparatus to minimize magnitude of the error signal.

Preferably, the timing control unit includes a recording unit recording the calculated error signal while changing timing of sampling at the converting apparatus, a timing determining unit determining the timing of sampling at the converting apparatus at which magnitude of the recorded error signal is minimized, and a timing adjusting unit adjusting timing of sampling of the converting apparatus to the determined timing.

More preferably, the timing adjusting unit includes a reference clock generating unit generating a reference clock at a prescribed timing, and a converting clock generating unit generating a converting clock defining the timing of sampling at the converting apparatus, by adjusting the timing of the reference clock to the timing determined by the timing determining unit.

More preferably, the error signal is a least square error between the extracted signal and the reference signal.

According to another aspect of the present invention, a radio base station system transmitting and receiving signals to and from a mobile terminal using a plurality of antennas includes a converting apparatus, an adaptive array processing unit, an error signal calculating unit and a timing control unit. The converting apparatus samples and converts to digital data a signal from the mobile terminal received by the plurality of antennas. The adaptive array processing unit performs an adaptive array processing on the digital data to extract a signal from a desired mobile terminal. The error signal calculating unit calculates an error signal between the extracted signal and a prescribed reference signal. The timing control unit controls transmission timing of a transmission signal to the mobile terminal to minimize magnitude of the error signal.

Preferably, the timing control unit includes a recording unit recording the calculated error signal while changing the transmission timing, a timing determining unit determining the transmission timing at which magnitude of the recorded error signal is minimized, and a timing adjusting unit adjusting the transmission timing of the transmission signal to the determined transmission timing.

More preferably, the timing control unit includes a recording unit recording the calculated error signal every time the transmission timing is changed, a direction control unit controlling direction of change of the transmission timing to the direction decreasing magnitude of error signals recorded preceding and succeeding in time by the recording unit, and a standby period setting unit providing a standby period of a prescribed number of frames between preceding and succeeding recordings by the recording unit.

More preferably, the timing control unit includes a recording unit recording the calculated error signals preceding and succeeding every change of the transmission timing, a direction control unit controlling direction of change of the transmission timing to the direction to decrease magnitude of preceding and succeeding error signals recorded by the recording unit, and a standby period setting unit providing a standby period of a prescribed number of frames between recordings preceding and succeeding the transmission timing and recordings preceding and succeeding next transmission timing by the recording unit.

More preferably, the recording unit records an average value of the error signals calculated over a prescribed number of frames as the calculated error signal.

More preferably, the recording unit provides a standby period of a prescribed number of frames between a change in the transmission timing and recording of the calculated error signal.

More preferably, the adaptive array processing unit separates and extracts signals from respective ones of a plurality of desired mobile terminals, the error signal calculating unit calculates error signal for each of the plurality of mobile terminals, and the timing control unit controls the transmission timing for each of the plurality of mobile terminals.

More preferably, the error signal is the least square error between the extracted signal and the reference signal.

According to a still further aspect, a sampling error reducing method in a radio base station system transmitting and receiving signals to and from a mobile terminal using a plurality of antennas includes the steps of sampling and converting to digital data a signal from the mobile terminal received by the plurality of antennas, performing an adaptive array processing on the digital data to extract a signal from a desired mobile terminal, calculating an error signal between the extracted signal and a prescribed reference signal, and controlling timing of the sampling to minimize magnitude of the error signal.

Preferably, the step of controlling the timing includes the steps of recording the calculated error signal while changing timings of the sampling, determining timing of the sampling at which magnitude of the recorded error signal is minimized, and adjusting the timing of the sampling to the determined timing.

More preferably, the step of adjusting timing includes the steps of generating a reference clock at a prescribed timing, and generating a converting clock defining the timing of the sampling, by adjusting the timing of the reference clock to the determined timing.

More preferably, the error signal is a least square error between the extracted signal and the reference signal.

According to a still further aspect of the present invention, a sampling error reducing method in a radio base station system transmitting and receiving signals to and from a mobile terminal using a plurality of antennas includes the steps of sampling and converting to digital data a signal from the mobile terminal received by the plurality of antennas, performing an adaptive array processing on the digital data to extract a signal from a desired mobile terminal, calculating an error signal between the extracted signal and a prescribed reference signal, and controlling transmission timing of a transmission signal to the mobile terminal to minimize magnitude of the error signal.

Preferably, the step of controlling the transmission timing includes the steps of recording the calculated error signal while changing the transmission timing, determining the transmission timing at which magnitude of the recorded error signal is minimized, and adjusting the transmission timing of the transmission signal to the determined transmission timing.

More preferably, the step of controlling the transmission timing includes the steps of recording the calculated error signal every time the transmission timing is changed, controlling direction of change of the transmission timing in a direction to decrease magnitude of error signals recorded preceding and succeeding in time in the step of recording, and providing a standby period of a prescribed number of frames between preceding and succeeding recordings in the step of recording.

More preferably, the step of controlling the transmission timing includes the steps of recording the calculated error signals preceding and succeeding every change of the transmission timing, controlling direction of change of the transmission timing in a direction to decrease magnitude of preceding and succeeding error signals recorded in the step of recording, and providing a standby period of a prescribed number of frames between recordings preceding and succeeding the transmission timing and recordings preceding and succeeding next the transmission timing in the step of recording.

More preferably, in the step of recording, an average value of error signals calculated over a prescribed number of frames is recorded as the calculated error signal.

More preferably, in the step of recording, a standby period of a prescribed number of frames is provided between a change in the transmission timing and recording of the calculated error signal.

More preferably, in the step of performing the adaptive array processing, signals from respective ones of a plurality of desired mobile terminals are separated and extracted, in the step of calculating the error signal, the error signal is calculated for each of the plurality of mobile terminals, and in the step of controlling the transmission timing, the transmission timing is controlled for each of the plurality of mobile terminals.

More preferably, the error signal is a least square error between the extracted signal and the reference signal.

According to a still further aspect, a sampling error reducing program in a radio base station system transmitting and receiving signals to and from a mobile terminal using a plurality of antennas causes a computer to execute the steps of sampling and converting to digital data a signal from the mobile terminal received by the plurality of antennas, performing an adaptive array processing on the digital data to extract a signal from a desired mobile terminal, calculating an error signal between the extracted signal and a prescribed reference signal, and controlling timing of the sampling to minimize magnitude of the error signal.

Preferably, the step of controlling the timing includes the steps of recording the calculated error signal while changing timing of the sampling, determining timing of the sampling at which magnitude of the recorded error signal is minimized, and adjusting the timing of sampling to the determined timing.

More preferably, the step of adjusting the timing includes the steps of generating a reference clock at a prescribed timing, and generating a converting clock defining the timing of the sampling, by adjusting the timing of the reference clock to the determined timing.

More preferably, the error signal is a least square error between the extracted signal and the reference signal.

According to a still further aspect, a sampling error reducing program in a radio base station system transmitting and receiving signals to and from a mobile terminal using a plurality of antennas causes a computer to execute the steps of sampling and converting to digital data a signal from the mobile terminal received by the plurality of antennas, performing an adaptive array processing on the digital data to extract a signal from a desired mobile terminal, calculating an error signal between the extracted signal and a prescribed reference signal, and controlling transmission timing of a transmission signal to the mobile terminal to minimize magnitude of the error signal.

Preferably, the step of controlling the transmission timing includes the steps of recording the calculated error signals while changing the transmission timing, determining the transmission timing at which magnitude of the recorded error signal is minimized, and adjusting the transmission timing of the transmission signal to the determined transmission timing.

More preferably, the step of controlling the transmission timing includes the steps of recording the calculated error signal every time the transmission timing is changed, controlling direction of change of the transmission timing in a direction to decrease magnitude of error signals recorded preceding and succeeding in time in the step of recording, and providing a standby period of a prescribed number of frames between preceding and succeeding recordings in the step of recording.

More preferably, the step of controlling the transmission timing includes the steps of recording the calculated error signals preceding and succeeding every change of the transmission timing, controlling direction of change of the transmission timing in a direction to decrease magnitude of preceding and succeeding error signals recorded in the step of recording, and providing a standby period of a prescribed number of frames between recordings preceding and succeeding the transmission timing and recordings preceding and succeeding next the transmission timing in the step of recording.

More preferably, in the step of recording, an average value of error signals calculated over a prescribed number of frames is recorded as the calculated error signal.

More preferably, in the step of recording, a standby period of a prescribed number of frames is provided between a change in the transmission timing and recording of the calculated error signal.

More preferably, in the step of performing the adaptive array processing, signals from respective ones of a plurality of desired mobile terminals are separated and extracted, in the step of calculating the error signal, the error signal is calculated for each of the plurality of mobile terminals, and in the step of controlling the transmission timing, the transmission timing is controlled for each of the plurality of mobile terminals.

More preferably, the error signal is a least square error between the extracted signal and the reference signal.

Therefore, according to the present invention, the sampling error is estimated based on magnitude of an error signal between an extracted signal of a desired mobile terminal and a reference signal, and sampling position at the converting apparatus is adjusted such that magnitude of the error signal is minimized. Therefore, it becomes possible to sample the reception signal at the reference phase point.

Further, according to the present invention, the sampling error is estimated based on magnitude of an error signal between an extracted signal of a desired mobile terminal and a reference signal, and transmission timing of a transmission signal is adjusted to minimize magnitude of the error signal. Therefore, even when there are multiple connections of a plurality of users, it becomes possible to sample the reception signal for each user at the reference phase point.

Brief Description of the Drawings

Fig. 1 is a function block diagram representing a radio base station system in accordance with Embodiment 1 of the present invention.

Fig. 2 is a diagram representing relation between a sampling error and 1/MSE.

Fig. 3 is a diagram representing relation between sampling timing and 1/MSE.

Fig. 4 is a block diagram representing a configuration of a reception timing control unit shown in Fig. 1.

Fig. 5 is a timing chart representing an operation of the reception timing control unit shown in Fig. 4.

Fig. 6 is a flow chart representing an operation of the radio base station system in accordance with Embodiment 1 of the present invention.

Fig. 7 is a table of delay times set in the operation shown in Fig. 6.

Fig. 8 is a functional block diagram representing a radio base station system in accordance with Embodiment 2 of the present invention.

Fig. 9 is a flow chart showing an exemplary operation of the radio base station system in accordance with Embodiment 2 of the present invention.

Fig. 10 is a table representing periods for shifting transmission timings set in the operation of Fig. 9.

Fig. 11 is a timing chart illustrating the operation of Fig. 9.

Fig. 12 is a flow chart showing another exemplary operation of the radio base station system in accordance with Embodiment 2 of the present invention.

Fig. 13 is a timing chart illustrating the operation of Fig. 12.

Fig. 14 is a flow chart showing a still further exemplary operation of the radio base station system in accordance with Embodiment 2 of the present invention.

Fig. 15 is a timing chart illustrating the operation of Fig. 14.

Fig. 16 is a flow chart representing a still further exemplary operation of the radio base station system in accordance with Embodiment 2 of the present invention.

Fig. 17 is a timing chart illustrating the operation of Fig. 16.

Fig. 18 is a flow chart showing a still further exemplary operation of the radio base station system in accordance with Embodiment 2 of the present invention.

Fig. 19 is a timing chart illustrating the operation of Fig. 18.

Fig. 20 is a functional block diagram representing a conventional radio base station system.

Fig. 21 is a functional block diagram representing another example of a conventional radio base station system.

Fig. 22 is a waveform diagram representing sampling timings of a reception system in the conventional radio base station system.

Best Modes for Carrying Out the Invention

Embodiment of the present invention will be described in detail with reference to the figures. In the figures, the same or corresponding portions are denoted by the same reference characters and description thereof will not be repeated.

[Embodiment 1]

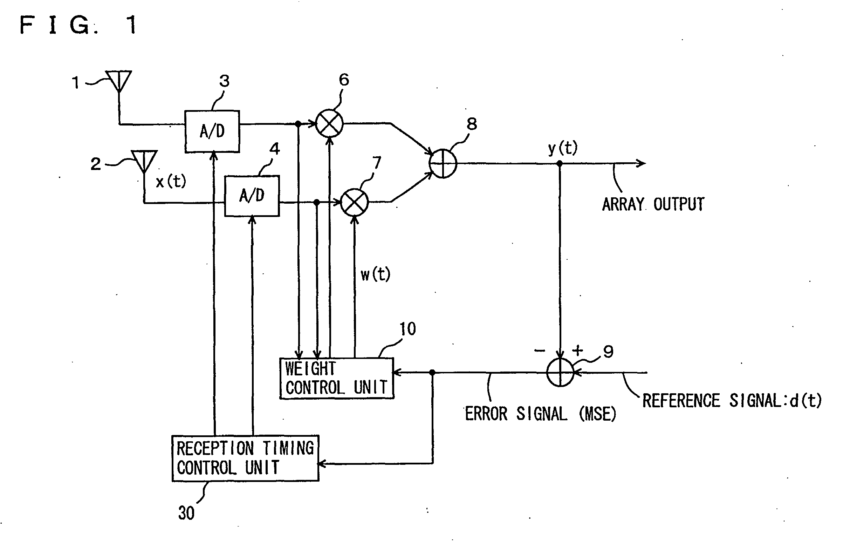

Fig. 1 is a functional block diagram functionally illustrating the process executed by a software, by a DSP of a radio base station system in accordance with Embodiment 1 of the present invention.

As already described with reference to Fig. 20, in the conventional radio base station system, there is a possibility that the reception signal is sampled at a position deviated from the reference phase point, because of sampling error.

Therefore, in the radio base station system in accordance with Embodiment 1 of the present invention, the sampling error is estimated based on the magnitude of MSE, and the reception position, that is, the timing of sampling clock of the reception signal at the A/D converter is adjusted to minimize the sampling error.

The radio base station system in accordance with Embodiment 1 shown in Fig. 1 has the same configuration as the conventional radio base station system shown in Fig. 20 except the following points. Specifically, in place of the independent reference clock generator 5 of Fig. 20, a reception timing control unit 30 that is controlled by MSE is provided, and by an A/D clock supplied from the reception timing control unit 30, sampling timing of the reception signal by A/D converters 3 and 4 is defined.

As described above, in the present invention, the sampling error is estimated based on the magnitude of MSE supplied from subtractor 9. Here, MSE between the array output y (t) and the reference signal d (t) can be calculated by time-averaging I d (t) - y(t)|$^2$.

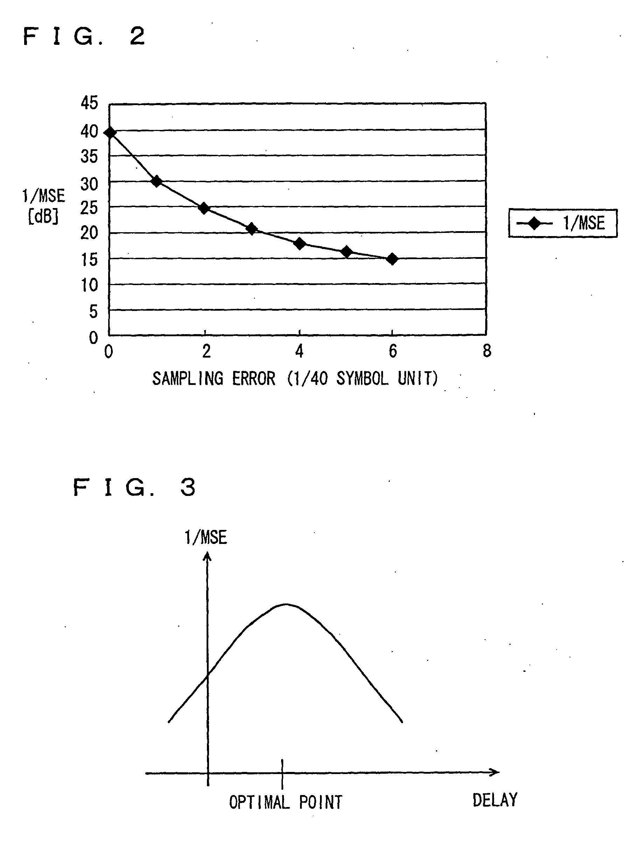

It has been experimentally proved that the relation shown in Fig. 2 holds between the thus calculated MSE and the sampling error. In the graph of Fig. 2, the ordinate represents 1/MSE (more strictly, one evaluated by 10Log$_{10}$ (1/MSE)) and the abscissa represents sampling error.

As is apparent from Fig. 2, the larger the value 1/MSE, that is, the smaller the value MSE, the sampling error as the deviation of sampling position from the reference phase point becomes smaller.

From the foregoing, it can be understood that the sampling error can be reduced when MSE is calculated, by adjusting the reception position of the reception signal to minimize the value of MSE.

In the graph of Fig. 3, the ordinate represents the value of 1/MSE, and the abscissa represents reception position of the reception signal, that is, sampling timing at A/D converters 3, 4. It would be understood that the sampling timing at which the value 1/MSE is the largest (MSE is the smallest) is the optimal point for minimizing the sampling error.

Therefore, in Embodiment 1 shown in Fig. 1, based on MSE supplied from subtractor 9, reception timing control unit 30 finds the optimal sampling point of the reception signal where MSE becomes the smallest, and based thereon, the sampling timing of the reception signal by A/D converters 3, 4 is adjusted.

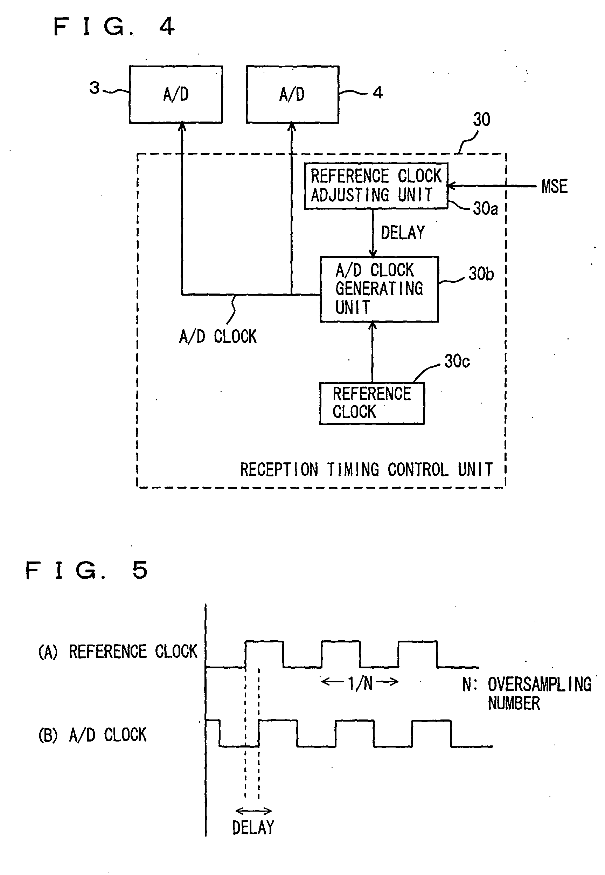

Fig. 4 is a block diagram representing a configuration of reception timing control unit 30 shown in Fig. 1. Referring to Fig. 4, reception timing control unit 30 includes a reference block adjusting unit 30a, an A/D clock generating unit 30b, and a reference cock generator 30c.

Fig. 5 is a timing chart representing an operation of reception timing control unit 30 shown in Fig. 4. Referring to the timing chart of Fig. 5, the operation of reception timing control unit 30 shown in Fig. 4 will be described.

From reference clock generator 30c, the reference clock shown in Fig. 5(A) is supplied at a prescribed timing to A/D clock generating unit 30b. Assuming that the number of oversampling per 1 symbol is N, the period of the reference clock is 1/N.

Reference clock generating unit 30a controls A/D clock generating unit 30b to generate an A/D clock by delaying the reference clock as shown in Fig. 5(B), which delayed clock is applied as the sampling clock, to A/D converters 3, 4.

Reference clock adjusting unit 30a monitors the value of MSE, based on the value of MSE supplied from subtractor 9 while changing time width for delaying the reference clock, that is, by shifting the timing of the A/D clock.

When the value of MSE is recorded while shifting the timing of AID clock by changing the time width of delay in this manner, such a graph as shown in Fig. 3 described above is obtained. Reference clock adjusting unit 30a determines the time width of delay for the optimal point at which MSE becomes the smallest based on the resulting graph, and controls A/D clock generating unit 30b so that an A/D clock shifted by the determined time width of delay from the reference clock is generated.

By the thus generated A/D clock, sampling timing of the reception signals of A/D converters 3, 4 is defined. As the sampling timing (reception position) is set to minimize MSE as shown in Fig. 3, the sampling error is minimized (0) as is apparent from the graph of Fig. 2, and it becomes possible to sample the reception signal at the reference phase point.

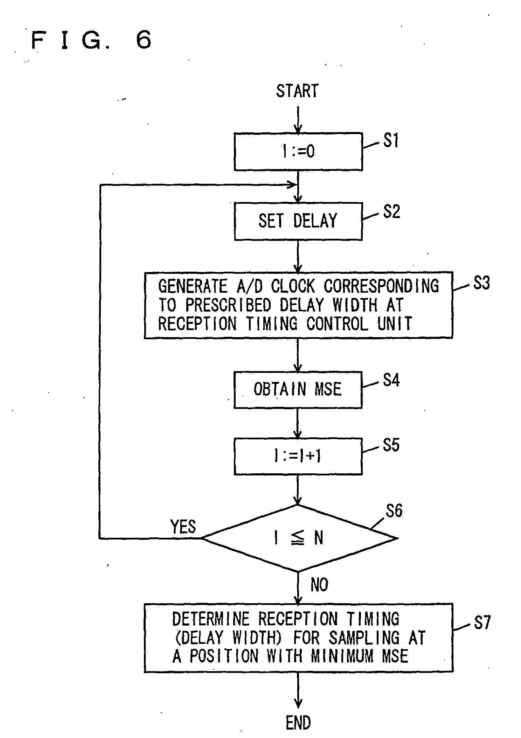

Fig. 6 is a flow chart representing a process when the operation of reception timing control unit 30 shown in Fig. 4 is implemented in a software manner using a DSP.

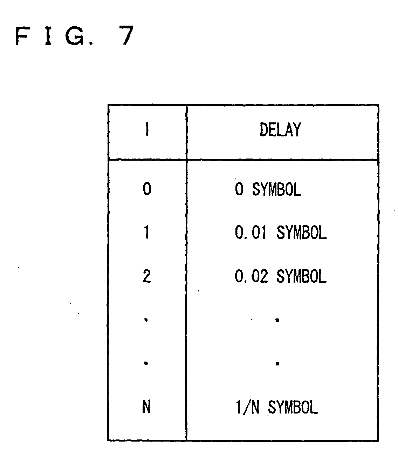

In the process shown in Fig. 6, assuming that the length from one sampling point to another sampling point is N, variable I= 0, 1, 2, ..., N is defined. Each of these values is for setting the delay time for gradually delaying the clock, as described with reference to Fig. 5. Fig. 7 shows an example of a table in which delay times are recorded in correspondence with the variable I. It is assumed that the table is held in a memory, not shown, of the radio base station system.

When the process starts, in step S1, variable I is set to I = 0, and in step S2, a delay time is set to the corresponding 0 symbol.

In response, in step S3, a corresponding A/D clock is generated by delaying the reference clock by the set delay time. In step S4, the MSE at that time is obtained and recorded in a memory, not shown.

Thereafter, in step S5, the variable I is incremented by 1, and when it is determined in step S6 that I has not yet reached N, the flow returns to step S2, and the corresponding delay time is set from the table.

Thereafter, the process steps S2 to S6 are repeated until the variable I reaches N, and when it is determined in step S6 that I has reached N, it follows that all the values of MSE corresponding to the preset all delay times are obtained and recorded. In other words, a graph corresponding to Fig. 3 is obtained.

Finally, based on the recorded MSE, in step S7, a time width of delay is determined with which the position where MSE is the smallest is determined as the reception position, that is, the sampling timing, and the A/D clock is generated accordingly.

As described above, according to Embodiment 1 of the present invention, the sampling error is estimated based on MSE between the array output and the reference signal, the timing of the sampling clock of the A/D converter is adjusted to minimize (0) the sampling error, and therefore, it becomes possible to sample the reception signals at the reference phase point.

[Embodiment 2]

In Embodiment 1 described above, the sampling error is estimated from the value of MSE, and the timing of the sampling clock of the A/D converter is adjusted to realize optimal reception position. This method is very effective for a circuit configuration that corresponds to a mobile terminal of one user such as shown in Fig. 1. It is, however, not applicable to radio base station system that handles a plurality of users such as shown in Fig. 21.

The reason is as follows. The sampling error differs user by user, and therefore, reception position must be adjusted for each user. As already described with reference to Fig. 21, though not shown in Fig. 21, each A/D converter is provided common to a plurality of users. Therefore, when a reception position optimal for one user is set, it becomes impossible to set optimal reception position for other users. When an A/D converter is provided for each user, the circuit scale and manufacturing cost would be increased.

Therefore, the radio base station in accordance with Embodiment 2 of the present invention is configured such that transmission timing of transmission signal is adjusted user by user, such that the sampling error is estimated based on the magnitude of MSE for each user and sampling error is minimized, even when there are path multiple connections of a plurality of users.

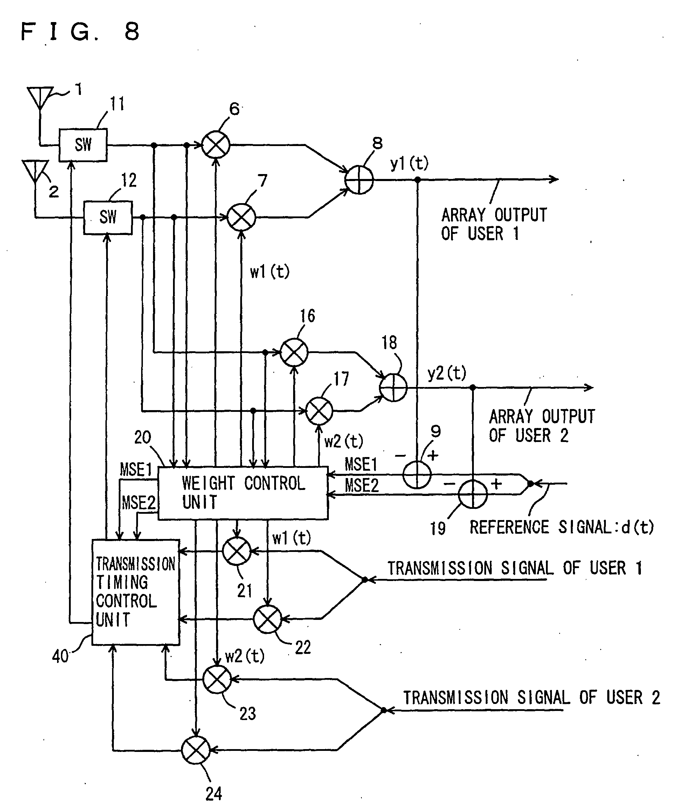

Fig. 8 is a functional block diagram representing a process executed in a software manner by a DSP of the radio base station system in accordance with Embodiment 2 of the present invention. The radio base station system in accordance with Embodiment 2 shown in Fig. 8 has the same configuration as the conventional radio base station system shown in Fig. 21 except for the following points.

Specifically, in Fig. 20, outputs of multipliers 21, 22, 23 and 24 are directly applied to switches 11 and 12, while in Fig. 8, there is provided a transmission timing control unit 40 controlled by MSE1 and MSE2, and transmission timings of a transmission signal (outputs of multipliers 21, 22) of user 1 and a transmission signal (outputs of multipliers 23, 24) of user 2 are controlled individually, by the transmission timing control unit 40.

The reason why the sampling timing of the reception signal for each user can be adjusted by controlling the transmission timing will be described.

In a mobile communication system such as the PHS, the transmission/reception timings of signals between the radio base station system and a mobile terminal are determined by a standard, such that the mobile terminal transmits a signal to the radio base station system a prescribed time period after the reception of a signal from the radio base station system.

Accordingly, when the timing of signal transmission is shifted user by user in the radio base station system, it follows that the timing of signal reception will be shifted at each corresponding mobile terminal. Accordingly, the timing of transmission from each mobile terminal to the radio base station system would be shifted terminal by terminal.

As a result, the timing of signal reception from each mobile terminal to the radio base station system would be shifted terminal by terminal.

In this manner, when the timing of signal transmission is controlled for each mobile terminal in the radio base station system, the timing of reception from each mobile terminal to the radio base station system can be controlled in an indirect manner, and hence it becomes possible to adjust the sampling point of the reception signal to the reference phase point.

As described in detail with reference to Embodiment 1, it is possible to estimate the sampling error from the MSE between the array output and the reference signal. Therefore, when the abscissa of the graph shown in Fig. 3 described above is changed from the clock delay time to the transmission timing, Embodiment 2 of the present invention shown in Fig. 8 is configured such that based on MSE1 corresponding to user 1 and MSE2 corresponding to user 2 supplied from subtractors 9, 19, transmission timing control unit 40 finds the transmission timing of each user at which the value MSE for each user is minimized, and based thereon, the transmission timing for each user is adjusted individually.

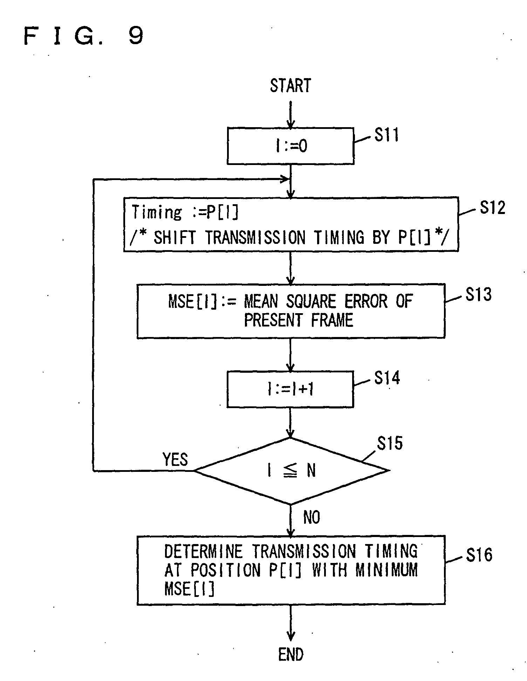

Fig. 9 is a flow chart representing an example of the process when the operation of transmission timing control unit 40 shown in Fig. 8 is realized in a software manner using a DSP.

In the process shown in Fig. 9, assuming that the length from one sampling point to another sampling point is N, the variable I = 0, 1, 2, ..., N is defined. Each of these values is for setting the time P [I] for gradually shifting the transmission timing. It is assumed that the transmission timing can be shifted only within the range of $\pm$ 1 samples in terms of reception sampling number in the radio base station system, that is, within the range of (1/number of oversamplings) symbols. This applies similarly to other examples of operation that will be described later.

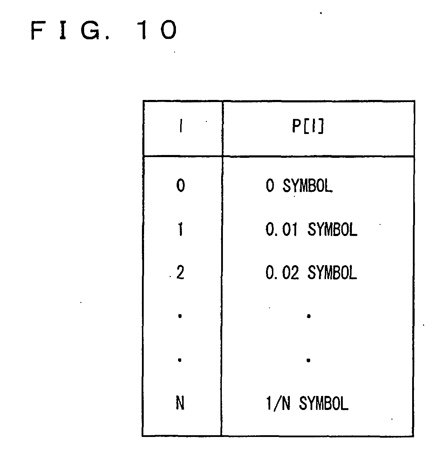

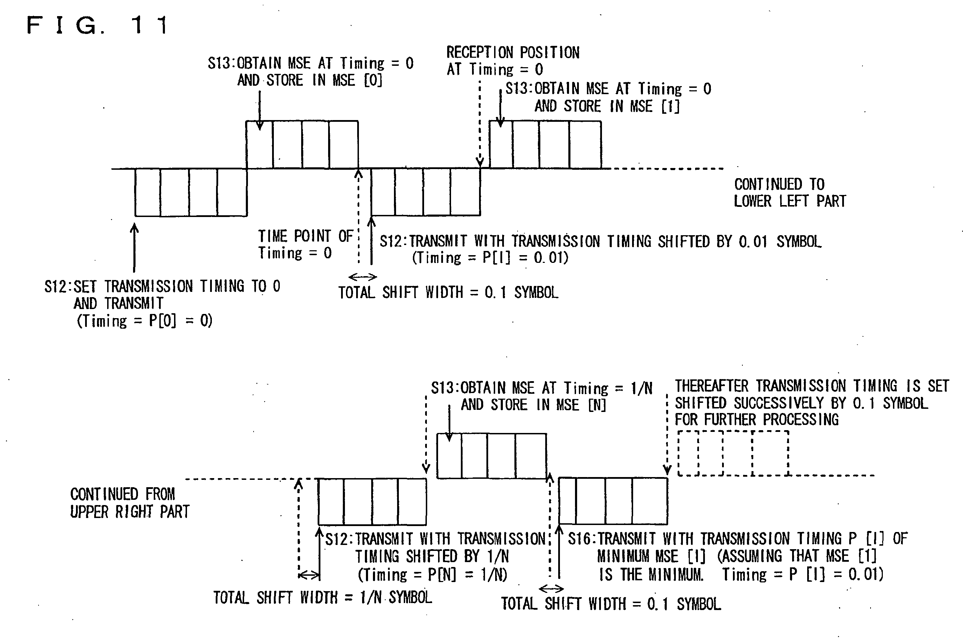

Fig. 10 shows an example of a table recording the time P [I] in correspondence with the variable I. It is assumed that the table is held in a memory, not shown, of the radio base station system. Fig. 11 is a timing chart illustrating the operation shown in Fig. 9.

Referring to Figs. 9 and 11, when a process starts for a specific user, first, in step S11, the variable I is set to I = 0, and in step S12, the period P [I] for shifting the transmission timing is set to 0 symbol.

In response, in step S13, MSE at that time is obtained and recorded in a memory, not shown.

Thereafter, in step S14, the variable I is incremented by 1, and when it is determined in step S15 that I has not yet reached N, the flow returns to step S12, and 0.01 symbol, which is the corresponding next time period P [I], is set from the table.

Thereafter, the process steps S12 to S15 are repeated until the variable I reaches N. When it is determined in step S15 that I has reached N, it follows that all the values of MSE corresponding to the preset all time periods P [I] are obtained and recorded. Namely, a graph corresponding to Fig. 3 with the abscissa representing the transmission timing is obtained.

Finally, based on the recorded MSE, in step S16, the time period P [I] (in the example shown in Fig. 11, 0.01 symbol) with which the position where MSE is minimum corresponds to the transmission timing is determined, and thereafter, the signals will be transmitted at this transmission timing for the corresponding user accordingly. Then, the processes shown in Figs. 9 and 11 are performed for each of the users of the path multiple connection of the corresponding radio base station system, and the transmission timing is determined individually for each user.

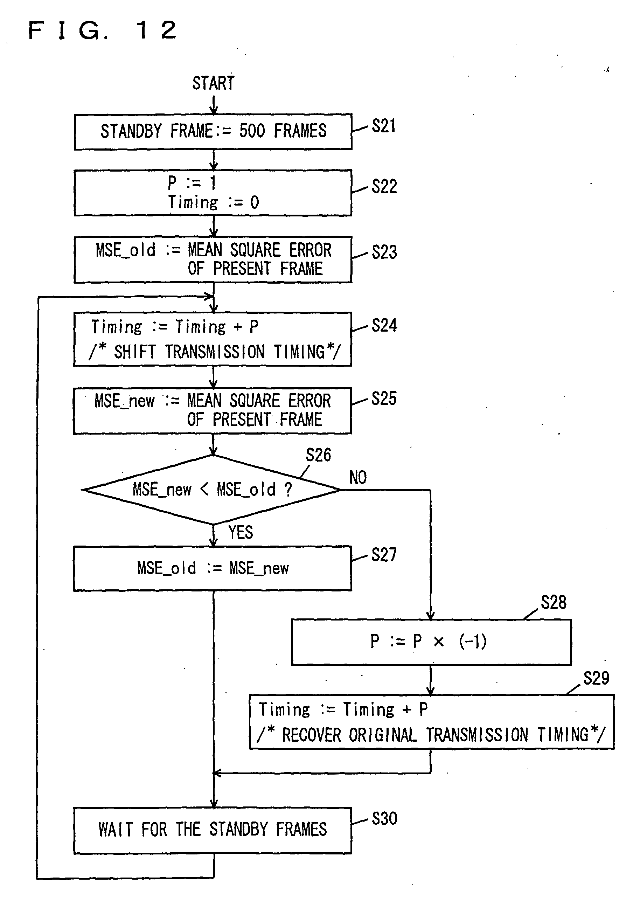

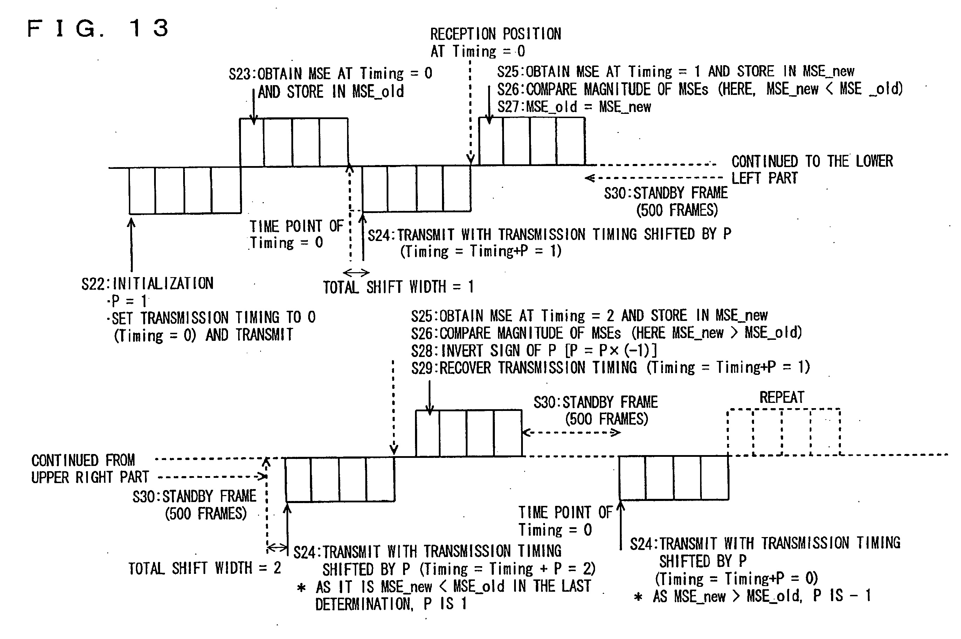

Fig. 12 is a flow chart showing another example of operation of the radio base station system in accordance with Embodiment 2 of the present invention, and Fig. 13 is a timing chart illustrating the operation shown in Fig. 12.

In this example, the transmission timing is shifted at a certain transmission timing point, MSE of the corresponding user at that time is obtained, normal processing is performed for a prescribed number of frames (for example, 500 frames) as a standby state, the transmission timing is shifted at the next transmission timing point and the MSE at that time is again obtained, and the latter is compared with the former MSE, so as to control the direction of shifting the transmission timing.

Referring to Figs. 12 and 13, first, in step S21, the number of standby frames between the transmission timing points for a specific user is set to 500 frames.

Thereafter, in step S22, the direction on a time axis of the time point P for once shifting the transmission timing is initialized to +1, for example, which indicates a positive direction, and the transmission timing is also initialized to 0.

Thereafter, in step S23, MSE of the corresponding frame is obtained and recorded in the memory.

Then, in step S24, the transmission timing is shifted by the time period P in the direction initialized in step S22, and in step S25, MSE of the corresponding frame is obtained and recorded.

In step S26, the former MSE obtained in step S23 is compared with the latter MSE obtained in step S25, and when the latter MSE is smaller, it is concluded that the transmission timing is shifted in the direction to decrease the sampling error, so that the latter MSE is held in the memory in step S27. When the latter MSE is not smaller, it is concluded that the transmission timing is shifted in the direction increasing the sampling error. Therefore, in step S28, the direction of shifting by the time period P is inverted to - 1 representing the negative direction, and in step S29, a process is performed to recover the transmission timing.

In step S30, normal processing is performed for the pre-set period of 500 frames, during which adjustment of the transmission timing is not performed.

In step S30, when the period of 500 frames has passed, the flow returns to step S24, in which the transmission timing is shifted by P, and in step S25, MSE of the corresponding frame is obtained.

Thereafter, the MSE newly obtained in step S25 is compared in step S26 with the MSE held in the memory of previous step S27, and in accordance with the result, the direction of adjustment of the transmission timing is controlled (steps S27-S29).

Further, the standby period of 500 frames starts in step S30.

As described above, the process steps S24 to S30 are repeatedly executed, and the transmission timing is continuously adjusted in the direction of reducing MSE, that is, the direction decreasing the sampling error. The processes shown in Figs. 12 and 13 are executed for each of the users of the path multiple connection to the radio base station system, and the transmission timing is controlled for each user individually.

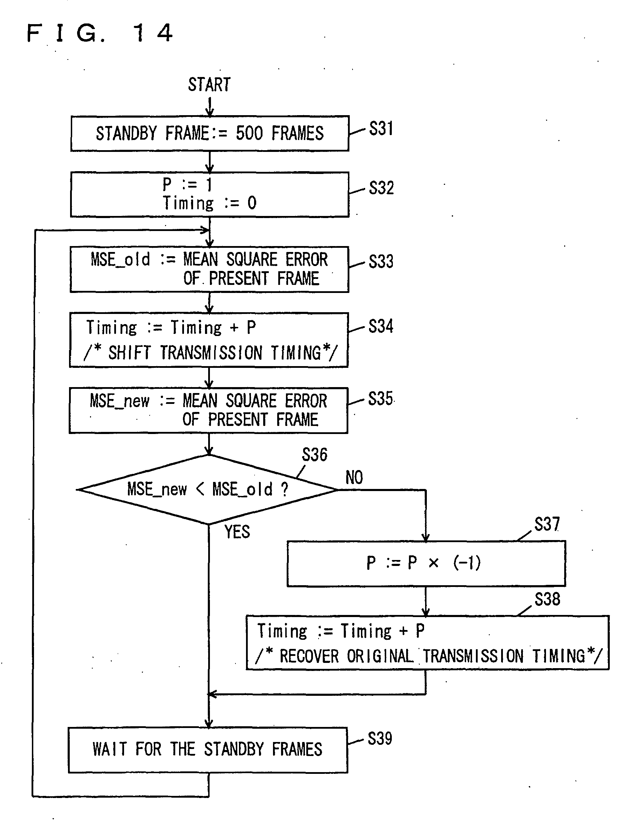

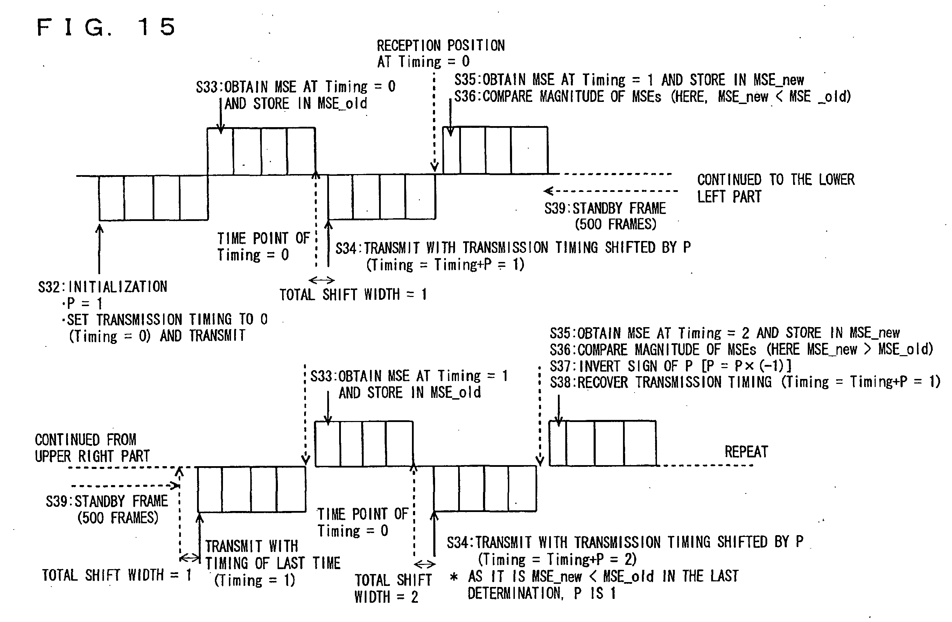

Fig. 14 is a flow chart showing a further exemplary operation of the radio base station system in accordance with Embodiment 2 of the present invention, and Fig. 15 is a timing chart illustrating the operation shown in Fig. 14.

This example differs from the one shown in Figs. 12 and 13 in the following points. Specifically, in the example shown in Figs. 12 and 13, a standby period of 500 frames is provided between the time point at which the first MSE is obtained (step S24) and the time point at which the next MSE is obtained. In the example shown in Figs. 14 and 15, MSE values are obtained in adjacent frames immediately preceding (step S33) and immediately succeeding (step S35) the shift of the transmission timing in step S34, the magnitude of these is compared in step S36, and increase/decrease of the sampling error is determined.

This is in consideration of time change of the MSE between the array output and the reference signal caused by the movement of the user, for example, and the interval for obtaining MSEs is made narrower. In this example shown in Figs. 12 and 13, it is possible that in the standby period of 500 frames, propagation path characteristics may change and comparison of MSEs obtained before and after the standby period would be incorrect. In the example shown in Figs. 14 and 15, such a situation is avoided as MSEs obtained in adjacent frames are compared.

The processes in other steps are the same as those of the example shown in Figs. 12 and 13, and description thereof will not be repeated.

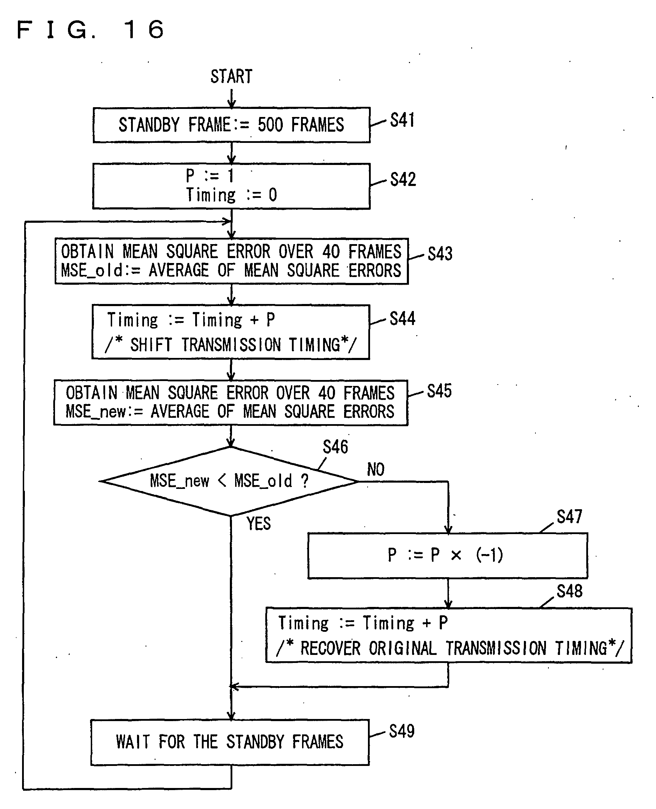

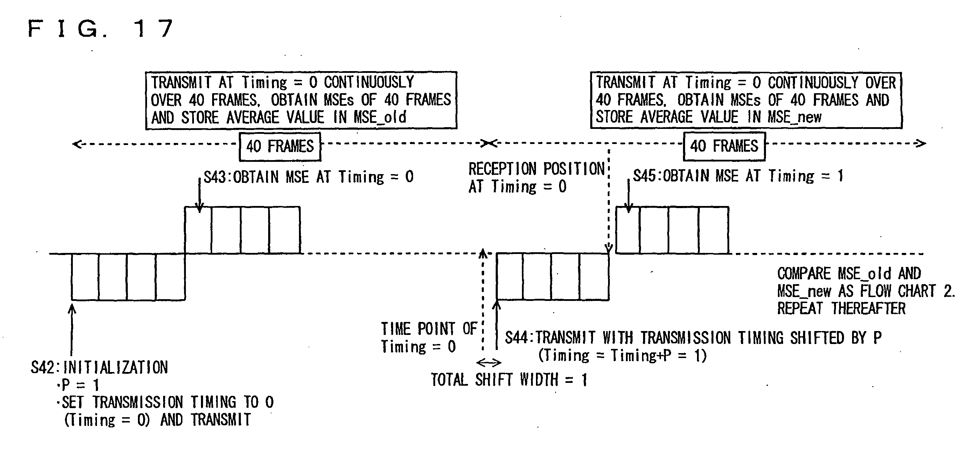

Fig. 16 is a flow chart showing a still further exemplary operation of the radio base station system in accordance with Embodiment 2 of the present invention, and Fig. 17 is a timing chart illustrating the operation shown in Fig. 16.

This example differs from the example shown in Figs. 14 and 15 only in the following point. In the process shown in Fig. 14, only the MSEs of respective frames are obtained in steps S33 and S35, whereas in the example shown in Figs. 16 and 17, MSEs for 40 frames are obtained in corresponding steps S43 and S45, mean values are held as the MSEs, and the held values are compared with each other in step S46.

In this example, MSEs over a prescribed number of frames (for example, 40 frames) are averaged, and therefore, estimation error when sampling error is estimated can be reduced.

Processes in other steps are the same as those of the example shown in Figs. 14 and 15, and description thereof will not be repeated.

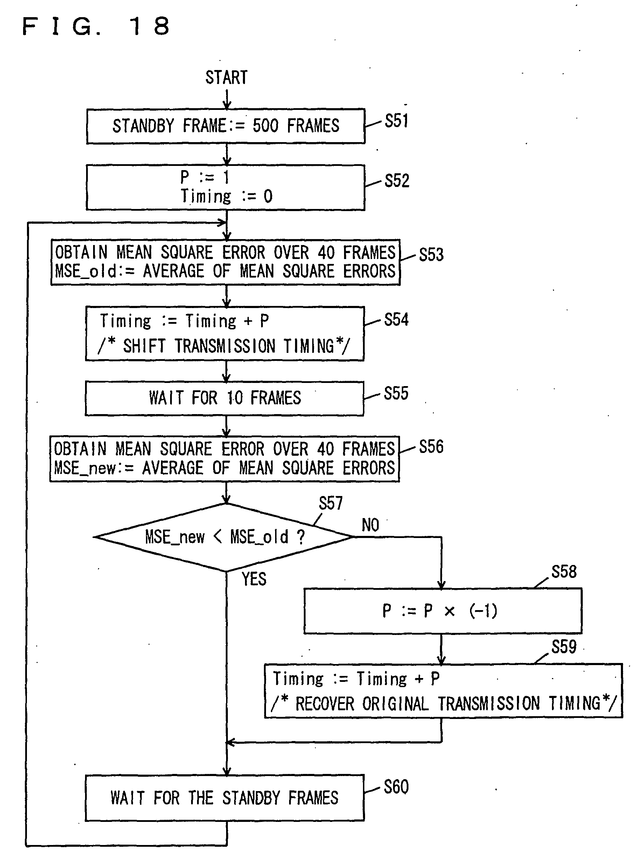

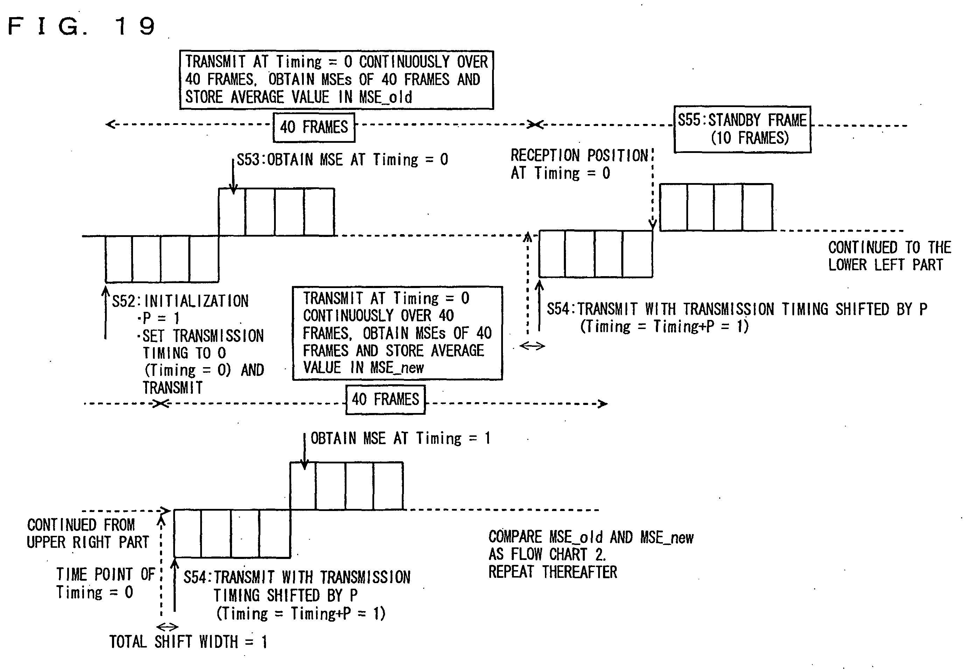

Fig. 18 is a flow chart showing a still further exemplary operation of the radio base station system in accordance with Embodiment 2 of the present invention, and Fig. 19 is a timing chart illustrating the operation shown in Fig. 18.

This example differs from the example shown in Figs. 16 and 17 only in the following point. Specifically, in the process shown in Fig. 16, a process for shifting the transmission timing is performed in step S44 and immediately thereafter, the next MSE is obtained in step S45. It is possible that the mobile terminal cannot immediately follow the process of shifting the transmission timing. Therefore, in this example, the process for shifting the transmission timing is performed in step S54, a standby period of a prescribed frames (for example, 10 frames) is provided in step S55, and the process for obtaining the next MSE is performed in step S56.

Processes in other steps are the same as those of the example shown in Figs. 16 and 17, and description thereof will not be repeated.

As described above, according to Embodiment 2 of the present invention, the sampling error is estimated based on the MSE between the array output and the reference signal, and the transmission timing of the transmission signal is adjusted to minimize (0) the sampling error. Therefore, even when there are path multiple connections of a plurality of users, it is possible to sample reception signal of each user at the reference phase point.

As described above, according to the present invention, sampling error is estimated based on the magnitude of an error signal between an extracted signal of a desired mobile terminal and a reference signal, and the sampling position at the converting means is adjusted to minimize the magnitude of the error signal. Therefore, it becomes possible to sample the reception signal at a reference phase point.

Further, according to the present invention, the sapling error is estimated based on the magnitude of an error signal between an extracted signal of a desired mobile terminal and a reference signal, and transmission timing of a transmission signal is adjusted to minimize the magnitude of the error signal. Therefore, even when there are multiple connections of a plurality of users, it is possible to sample the reception signal for each user at a reference phase point.

Industrial Applicability

As described above, in accordance with the radio base station system, the sampling error reducing method and the sampling error reducing program of the present invention, the sampling error is estimated based on the magnitude of an error signal between an extracted signal of a desired mobile terminal and a reference signal, and various adjustments are performed to minimize the magnitude of the error signal. Therefore, the present invention is useful in improving signal reception performance of the radio base station system.

**Claims**

1. A radio base station system transmitting and receiving signals to and from a mobile terminal using a plurality of antennas (1, 2), comprising:

   a converting apparatus (3, 4) sampling and converting to digital data a signal from said mobile terminal received by said plurality of antennas;
   an adaptive array processing unit (6, 7, 8, 10) performing an adaptive array processing on said digital data to extract a signal from a desired mobile terminal;
   an error signal calculating unit (9) calculating an error signal between said extracted signal and a prescribed reference signal; and
   a timing control unit (30) controlling timing of sampling at said converting apparatus to minimize magnitude of said error signal.

2. The radio base station system according to claim 1, wherein
   said timing control unit includes
   a recording unit recording said calculated error signal while changing timing of sampling at said converting apparatus,
   a timing determining unit determining the timing of sampling at said converting apparatus at which magnitude of said recorded error signal is minimized, and
   a timing adjusting unit adjusting timing of sampling at said converting apparatus to said determined timing.

3. The radio base station system according to claim 2, wherein
   said timing adjusting unit includes
   a reference clock generating unit generating a reference clock at a prescribed timing, and
   a converting clock generating unit generating a converting clock defining the timing of sampling at said converting apparatus, by adjusting the timing of said reference clock to the timing determined by said timing determining unit.

4. The radio base station system according to claim 1, wherein
   said error signal is a least square error between said extracted signal and said reference signal.

5. A radio base station system transmitting and receiving signals to and from a mobile terminal using a plurality of antennas (1, 2), comprising:

   a converting apparatus (3, 4) sampling and converting to digital data a signal from said mobile terminal received by said plurality of antennas;
   an adaptive array processing unit (6, 7, 8, 16, 17, 18, 20) performing an adaptive array processing on said digital data to extract a signal from a desired mobile terminal;
   an error signal calculating unit (9, 19) calculating an error signal between said extracted signal and a prescribed reference signal; and
   a timing control unit (40) controlling transmission timing of a transmission signal to said mobile terminal to minimize magnitude of said error signal.

6. The radio base station system according to claim 5, wherein
   said timing control unit includes
   a recording unit recording said calculated error signal while changing said transmission timing,
   a timing determining unit determining said transmission timing at which magnitude of said recorded error signal is minimized, and
   a timing adjusting unit adjusting the transmission timing of said transmission signal to said determined transmission timing.

7. The radio base station system according to claim 6, wherein
   said recording unit records an average value of error signals calculated over a prescribed number of frames as said calculated error signal.

8. The radio base station system according to claim 6, wherein said recording unit provides a standby period of a prescribed number of frames between a change in said transmission timing and recording of said calculated error signal.

9. The radio base station system according to claim 5, wherein
   said timing control unit includes
   a recording unit recording said calculated error signal every time said transmission timing is changed,

a direction control unit controlling direction of change of said transmission timing in a direction decreasing magnitude of error signals recorded preceding and succeeding in time by said recording unit, and

a standby period setting unit providing a standby period of a prescribed number of frames between preceding and succeeding recordings by said recording unit.

10. The radio base station system according to claim 9, wherein

said recording unit records an average value of error signals calculated over a prescribed number of frames as said calculated error signal.

11. The radio base station system according to claim 9, wherein

said recording unit provides a standby period of a prescribed number of frames between a change in said transmission timing and recording of said calculated error signal.

12. The radio base station system according to claim 5, wherein

said timing control unit includes

a recording unit recording said calculated error signals preceding and succeeding every change of said transmission timing,

a direction control unit controlling direction of change of said transmission timing in a direction to decrease magnitude of preceding and succeeding error signals recorded by said recording unit, and

a standby period setting unit providing a standby period of a prescribed number of frames between recordings preceding and succeeding said transmission timing and recordings preceding and succeeding next said transmission timing by said recording unit.

13. The radio base station system according to claim 12, wherein

said recording unit records an average value of error signals calculated over a prescribed number of frames as said calculated error signal.

14. A radio base station system according to claim 12, wherein

said recording unit provides a standby period of a prescribed number of frames between a change in said transmission timing and recording of said calculated error signal.

15. The radio base station system according to claim 5, wherein

said adaptive array processing unit separates and extracts signals from respective ones of a plurality of desired mobile terminals;

said error signal calculating unit calculates said error signal for each of said plurality of mobile terminals; and

said timing control unit controls said transmission timing for each of said plurality of mobile terminals.

16. The radio base station system according to claim 5, wherein

said error signal is a least square error between said extracted signal and said reference signal.

17. A sampling error reducing method in a radio base station system transmitting and receiving signals to and from a mobile terminal using a plurality of antennas (1, 2), comprising the steps of:

sampling and converting to digital data a signal from said mobile terminal received by said plurality of antennas;

performing an adaptive array processing on said digital data to extract a signal from a desired mobile terminal;

calculating an error signal between said extracted signal and a prescribed reference signal; and

controlling timing of said sampling to minimize magnitude of said error signal.

18. The sampling error reducing method according to claim 17, wherein

said step of controlling said timing includes the steps of

recording said calculated error signal while changing timing of said sampling,

determining timing of said sampling at which magnitude of said recorded error signal is minimized, and

adjusting the timing of said sampling to said determined timing.

19. The sampling error reducing method according to claim 18, wherein

said step of adjusting said timing includes the steps of

generating a reference clock at a prescribed timing, and

generating a converting clock defining the timing of said sampling, by adjusting the timing of said reference clock to said determined timing.

20. The sampling error reducing method according to claim 17, wherein

said error signal is a least square error between said extracted signal and said reference signal.

**21.** A sampling error reducing method in a radio base station system transmitting and receiving signals to and from a mobile terminal using a plurality of antennas (1, 2), comprising the steps of:

sampling and converting to digital data a signal from said mobile terminal received by said plurality of antennas;
performing an adaptive array processing on said digital data to extract a signal from a desired mobile terminal;
calculating an error signal between said extracted signal and a prescribed reference signal; and
controlling transmission timing of a transmission signal to said mobile terminal to minimize magnitude of said error signal.

**22.** The sampling error reducing method according to claim 21, wherein
said step of controlling said transmission timing includes the steps of
recording said calculated error signal while changing said transmission timing,
determining said transmission timing at which magnitude of said recorded error signal is minimized, and
adjusting the transmission timing of said transmission signal to said determined transmission timing.

**23.** The sampling error reducing method according to claim 22, wherein
in said step of recording, an average value of error signals calculated over a prescribed number of frames is recorded as said calculated error signal.

**24.** The sampling error reducing method according to claim 22, wherein
in said step of recording, a standby period of a prescribed number of frames is provided between a change in said transmission timing and recording of said calculated error signal.

**25.** The sampling error reducing method according to claim 21, wherein
said step of controlling said transmission timing includes the steps of
recording said calculated error signal every time said transmission timing is changed,
controlling direction of change of said transmission timing in a direction to decrease magnitude of error signals recorded preceding and succeeding in time in said step of recording, and
providing a standby period of a prescribed number of frames between preceding and succeeding recordings of said step of recording.

**26.** The sampling error reducing method according to claim 25, wherein
in said step of recording, an average value of error signals calculated over a prescribed number of frames is recorded as said calculated error signal.

**27.** The sampling error reducing method according to claim 25, wherein
in said step of recording, a standby period of a prescribed number of frames is provided between a change in said transmission timing and recording of said calculated error signal.

**28.** The sampling error reducing method according to claim 21, wherein
said step of controlling said transmission timing includes the steps of
recording said calculated error signals preceding and succeeding every change of said transmission timing,
controlling direction of change of said transmission timing in a direction to decrease magnitude of preceding and succeeding error signals recorded in said step of recording, and
providing a standby period of a prescribed number of frames between recordings preceding and succeeding said transmission timing and recordings preceding and succeeding next said transmission timing in said step of recording.

**29.** The sampling error reducing method according to claim 28, wherein,
in said step of recording, an average value of error signals calculated over a prescribed number of frames is recorded as said calculated error signal.

**30.** The sampling error reducing method according to claim 28, wherein
in said step of recording, a standby period of a prescribed number of frames is provided between a change in said transmission timing and recording of said calculated error signal.

**31.** The sampling error reducing method according to claim 21, wherein
in said step of performing said adaptive array processing, signals from respective ones of a plurality of desired mobile terminals are separated and extracted;
in said step of calculating said error signal, said error signal is calculated for each of said plurality of mobile terminals; and
in said step of controlling said transmission timing, said transmission timing is controlled for each of said plurality of mobile terminals.

**32.** The sampling error reducing method according to claim 21, wherein

said error signal is a least square error between said extracted signal and said reference signal.

**33.** A sampling error reducing program in a radio base station system transmitting and receiving signals to and from a mobile terminal using a plurality of antennas (1, 2), causing a computer to execute the steps of:

sampling and converting to digital data a signal from said mobile terminal received by said plurality of antennas;

performing an adaptive array processing on said digital data to extract a signal from a desired mobile terminal;

calculating an error signal between said extracted signal and a prescribed reference signal; and

controlling timing of said sampling to minimize magnitude of said error signal.

**34.** The sampling error reducing program according to claim 33, wherein

said step of controlling said timing includes the steps of

recording said calculated error signal while changing timing of said sampling,

determining timing of said sampling at which magnitude of said recorded error signal is minimized, and

adjusting the timing of said sampling to said determined timing.

**35.** The sampling error reducing program according to claim 34, wherein

said step of adjusting said timing includes the steps of

generating a reference clock at a prescribed timing, and

generating a converting clock defining the timing of said sampling, by adjusting the timing of said reference clock to said determined timing.

**36.** The sampling error reducing program according to claim 33, wherein

said error signal is a least square error between said extracted signal and said reference signal.

**37.** A sampling error reducing program in a radio base station system transmitting and receiving signals to and from a mobile terminal using a plurality of antennas (1, 2), causing a computer to execute the steps of:

sampling and converting to digital data a signal from said mobile terminal received by said plurality of antennas;

performing an adaptive array processing on said digital data to extract a signal from a desired mobile terminal;

calculating an error signal between said extracted signal and a prescribed reference signal; and

controlling transmission timing of a transmission signal to said mobile terminal to minimize magnitude of said error signal.

**38.** The sampling error reducing program according to claim 37, wherein

said step of controlling said transmission timing includes the steps of

recording said calculated error signal while changing said transmission timing,

determining said transmission timing at which magnitude of said recorded error signal is minimized, and

adjusting the transmission timing of said transmission signal to said determined transmission timing.

**39.** The sampling error reducing program according to claim 38, wherein

in said step of recording, an average value of error signals calculated over a prescribed number of frames is recorded as said calculated error signal.

**40.** The sampling error reducing program according to claim 38, wherein

in said step of recording, a standby period of a prescribed number of frames is provided between a change in said transmission timing and recording of said calculated error signal.

**41.** The sampling error reducing program according to claim 37, wherein

said step of controlling said transmission timing includes the steps of

recording said calculated error signal every time said transmission timing is changed,

controlling direction of change of said transmission timing in a direction to decrease magnitude of error signals recorded preceding and succeeding in time in said step of recording, and

providing a standby period of a prescribed number of frames between preceding and succeeding recordings of said step of recording.

**42.** The sampling error reducing program according to claim 41, wherein

in said step of recording, an average value of error signals calculated over a prescribed number of frames is recorded as said calculated error signal.

**43.** The sampling error reducing program according to claim 41, wherein

in said step of recording, a standby period of a prescribed number of frames is provided between a change in said transmission timing and recording of said calculated error signal.

**44.** The sampling error reducing program according to claim 37, wherein

said step of controlling said transmission timing includes the steps of

recording said calculated error signals preceding and succeeding every change of said transmission timing,

controlling direction of change of said transmission timing in a direction to decrease magnitude of preceding and succeeding error signals recorded in said step of recording, and

providing a standby period of a prescribed number of frames between recordings preceding and succeeding said transmission timing and recordings preceding and succeeding next said transmission timing in said step of recording.

**45.** The sampling error reducing program according to claim 44, wherein

in said step of recording, an average value of error signals calculated over a prescribed number of frames is recorded as said calculated error signal.

**46.** The sampling error reducing program according to claim 44, wherein

in said step of recording, a standby period of a prescribed number of frames is provided between a change in said transmission timing and recording of said calculated error signal.

**47.** The sampling error reducing program according to claim 37, wherein

in said step of performing said adaptive array processing, signals from respective ones of a plurality of desired mobile terminals are separated and extracted;

in said step of calculating said error signal, said error signal is calculated for each of said plurality of mobile terminals; and

in said step of controlling said transmission timing, said transmission timing is controlled for each of said plurality of mobile terminals.

**48.** The sampling error reducing program according to claim 37, wherein

said error signal is a least square error between said extracted signal and said reference signal.

# F I G. 1

EP 1 320 201 A1

F I G . 2

1/MSE
[dB]

SAMPLING ERROR (1/40 SYMBOL UNIT)

◆ 1/MSE

F I G . 3

1/MSE

OPTIMAL POINT

DELAY

# F I G. 4

```
3 ─┐ ┌──────┐        ┌──────┐
   └─┤ A/D  │        │ A/D  ├─── 4
     └──────┘        └──────┘
```

```
                                                    30
        ┌─ ─ ─ ─ ─ ─ ─ ─ ─ ─ ─ ─ ─ ─ ─ ─ ─ ─ ─ ─ ┐
        │                   ┌─────────────────┐      │
        │                   │ REFERENCE CLOCK │   ◄──── MSE
        │                   │ ADJUSTING UNIT  │      │
        │                   └─────────────────┘ 30a  │
        │                          │ DELAY           │
        │                          ▼                 │
        │                   ┌─────────────┐          │
        │                   │ A/D CLOCK   │  30b      │
        │                   │ GENERATING  │          │
        │                   │ UNIT        │          │
        │                   └─────────────┘          │
        │    A/D CLOCK             ▲                  │
        │                          │         30c      │
        │                   ┌─────────────┐          │
        │                   │ REFERENCE   │          │
        │                   │ CLOCK       │          │
        │                   └─────────────┘          │
        │                                            │
        │          RECEPTION TIMING CONTROL UNIT     │
        └─ ─ ─ ─ ─ ─ ─ ─ ─ ─ ─ ─ ─ ─ ─ ─ ─ ─ ─ ─ ─ ┘
```

# F I G. 5

```
(A) REFERENCE CLOCK    ┌─┐   ┌──┐  ┌──┐  ┌──┐
                    ───┘ └───┘  └──┘  └──┘  └──
                           ←─ 1/N ─→      N: OVERSAMPLING
                                             NUMBER
(B) A/D CLOCK        ┌┐    ┌──┐  ┌──┐  ┌──┐
                    ─┘└────┘  └──┘  └──┘  └──
                       ←→
                      DELAY
```

F I G. 6

```
                        START
                          │
                          ▼
                  ┌───────────────┐
                  │   I := 0      │──── S1
                  └───────────────┘
                          │
          ┌──────────────▶│
          │               ▼
          │       ┌───────────────┐
          │       │   SET DELAY   │──── S2
          │       └───────────────┘
          │               │
          │               ▼
          │   ┌─────────────────────────────────┐
          │   │ GENERATE A/D CLOCK CORRESPONDING │──── S3
          │   │ TO PRESCRIBED DELAY WIDTH AT     │
          │   │ RECEPTION TIMING CONTROL UNIT    │
          │   └─────────────────────────────────┘
          │               │
          │               ▼
          │       ┌───────────────┐
          │       │  OBTAIN MSE   │──── S4
          │       └───────────────┘
          │               │
          │               ▼
          │       ┌───────────────┐
          │       │  I := I + 1   │──── S5
          │       └───────────────┘
          │               │
          │               ▼
          │  YES      ◇─────────◇ ──── S6
          └──────────│  I ≦ N   │
                      ◇─────────◇
                          │ NO
                          ▼
          ┌─────────────────────────────────┐
          │ DETERMINE RECEPTION TIMING       │──── S7
          │ (DELAY WIDTH) FOR SAMPLING AT    │
          │ A POSITION WITH MINIMUM MSE      │
          └─────────────────────────────────┘
                          │
                          ▼
                        END
```

# F I G. 7

| I | DELAY |
|---|---|
| 0 | 0 SYMBOL |
| 1 | 0.01 SYMBOL |
| 2 | 0.02 SYMBOL |
| . | . |
| . | . |
| N | 1/N SYMBOL |

F I G. 8

ARRAY OUTPUT OF USER 1

y1(t)

w1(t)

ARRAY OUTPUT OF USER 2

y2(t)

w2(t)

WEIGHT CONTROL UNIT

MSE1

MSE2

REFERENCE SIGNAL : d(t)

TRANSMISSION TIMING CONTROL UNIT

w1(t)

TRANSMISSION SIGNAL OF USER 1

w2(t)

TRANSMISSION SIGNAL OF USER 2

F I G. 9

```
                    START
                      ↓
              ┌──────────────┐
              │    I :=0      │──── S11
              └──────────────┘
                      ↓
     ┌──→  ┌────────────────────────────────────┐
     │     │ Timing :=P[I]                      │──── S12
     │     │ /* SHIFT TRANSMISSION TIMING BY P[I]*/│
     │     └────────────────────────────────────┘
     │                ↓
     │     ┌────────────────────────────────────┐
     │     │ MSE[I]:= MEAN SQUARE ERROR OF      │──── S13
     │     │          PRESENT FRAME             │
     │     └────────────────────────────────────┘
     │                ↓
     │          ┌──────────────┐
     │          │   I :=I+1     │──── S14
     │          └──────────────┘
     │                ↓
     │   YES        ◇◇◇◇◇             S15
     └──────────◇   I ≦ N   ◇
                   ◇◇◇◇◇
                      ↓ NO
              ┌────────────────────────────────────┐
              │ DETERMINE TRANSMISSION TIMING      │──── S16
              │ AT POSITION P[I] WITH MINIMUM      │
              │ MSE[I]                             │
              └────────────────────────────────────┘
                      ↓
                    END
```

# F I G.  1 0

| I | P[I] |
|---|------|
| 0 | 0 SYMBOL |
| 1 | 0.01 SYMBOL |
| 2 | 0.02 SYMBOL |
| . | . |
| . | . |
| N | 1/N SYMBOL |

# F I G. 1 1

S13:OBTAIN MSE AT Timing = 0
AND STORE IN MSE [0]

RECEPTION POSITION
AT Timing = 0

S13:OBTAIN MSE AT Timing = 0
AND STORE IN MSE [1]

CONTINUED TO
LOWER LEFT PART

TIME POINT OF
Timing = 0

S12:TRANSMIT WITH TRANSMISSION TIMING SHIFTED BY 0.01 SYMBOL
(Timing = P[I] = 0.01)

S12:SET TRANSMISSION TIMING TO 0
AND TRANSMIT
(Timing = P[0] = 0)

TOTAL SHIFT WIDTH = 0.1 SYMBOL

S13:OBTAIN MSE AT Timing = 1/N
AND STORE IN MSE [N]

THEREAFTER TRANSMISSION TIMING IS SET
SHIFTED SUCCESSIVELY BY 0.1 SYMBOL
FOR FURTHER PROCESSING

CONTINUED FROM
UPPER RIGHT PART

S12:TRANSMIT WITH TRANSMISSION
TIMING SHIFTED BY 1/N
(Timing = P[N] = 1/N)

S16:TRANSMIT WITH TRANSMISSION TIMING P [I] OF
MINIMUM MSE [I] (ASSUMING THAT MSE [1]
IS THE MINIMUM. Timing = P [I] = 0.01)

TOTAL SHIFT WIDTH = 1/N SYMBOL

TOTAL SHIFT WIDTH = 0.1 SYMBOL

EP 1 320 201 A1

F I G. 1 2

START

STANDBY FRAME := 500 FRAMES — S21

P := 1
Timing := 0 — S22

MSE_old := MEAN SQUARE ERROR
OF PRESENT FRAME — S23

Timing := Timing + P
/* SHIFT TRANSMISSION TIMING*/ — S24

MSE_new := MEAN SQUARE ERROR
OF PRESENT FRAME — S25

S26
MSE_new < MSE_old ? — NO

YES

MSE_old := MSE_new — S27

P := P × (−1) — S28

Timing := Timing + P
/* RECOVER ORIGINAL TRANSMISSION TIMING*/ — S29

WAIT FOR THE STANDBY FRAMES — S30

# FIG. 13

S23:OBTAIN MSE AT Timing = 0
AND STORE IN MSE_old

RECEPTION POSITION
AT Timing = 0

S25:OBTAIN MSE AT Timing = 1 AND STORE IN MSE_new
S26:COMPARE MAGNITUDE OF MSEs (HERE, MSE_new < MSE_old)
S27:MSE_old = MSE_new

CONTINUED TO THE LOWER
LEFT PART

S30:STANDBY FRAME
(500 FRAMES)

TIME POINT OF
Timing = 0

S24:TRANSMIT WITH TRANSMISSION TIMING SHIFTED BY P
(Timing = Timing+P = 1)

S22:INITIALIZATION
·P = 1
·SET TRANSMISSION TIMING TO 0
(Timing = 0) AND TRANSMIT

TOTAL SHIFT WIDTH = 1

S25:OBTAIN MSE AT Timing = 2 AND STORE IN MSE_new
S26:COMPARE MAGNITUDE OF MSEs (HERE MSE_new > MSE_old)
S28:INVERT SIGN OF P [P = P× (-1)]
S29:RECOVER TRANSMISSION TIMING (Timing = Timing+P = 1)

S30:STANDBY FRAME
(500 FRAMES)

REPEAT

CONTINUED FROM
UPPER RIGHT PART

S30:STANDBY FRAME
(500 FRAMES)

TIME POINT OF
Timing = 0

TOTAL SHIFT WIDTH = 2

S24:TRANSMIT WITH TRANSMISSION TIMING
SHIFTED BY P (Timing = Timing + P = 2)
* AS IT IS MSE_new < MSE_old IN THE LAST
DETERMINATION, P IS 1

S24:TRANSMIT WITH TRANSMISSION TIMING
SHIFTED BY P
(Timing = Timing+P = 0)
* AS MSE_new > MSE_old, P IS - 1

EP 1 320 201 A1

FIG. 14

START

STANDBY FRAME := 500 FRAMES — S31

P := 1
Timing := 0 — S32

MSE_old := MEAN SQUARE ERROR
OF PRESENT FRAME — S33

Timing := Timing + P
/* SHIFT TRANSMISSION TIMING*/ — S34

MSE_new := MEAN SQUARE ERROR
OF PRESENT FRAME — S35

MSE_new < MSE_old ? — S36    NO

YES

P := P × (-1) — S37

Timing := Timing + P
/* RECOVER ORIGINAL TRANSMISSION TIMING*/ — S38

WAIT FOR THE STANDBY FRAMES — S39

# F I G. 1 5

RECEPTION POSITION
AT Timing = 0

S33:OBTAIN MSE AT Timing = 0
AND STORE IN MSE_old

S35:OBTAIN MSE AT Timing = 1 AND STORE IN MSE_new
S36:COMPARE MAGNITUDE OF MSEs (HERE, MSE_new < MSE _old)

CONTINUED TO THE LOWER
LEFT PART

S39:STANDBY FRAME
(500 FRAMES)

TIME POINT OF
Timing = 0

S34:TRANSMIT WITH TRANSMISSION TIMING SHIFTED BY P
(Timing = Timing+P = 1)

S32:INITIALIZATION
·P = 1
·SET TRANSMISSION TIMING TO 0
(Timing = 0) AND TRANSMIT

TOTAL SHIFT WIDTH = 1

S35:OBTAIN MSE AT Timing = 2 AND STORE IN MSE_new
S36:COMPARE MAGNITUDE OF MSEs (HERE MSE_new > MSE_old)
·S37:INVERT SIGN OF P [P = P × (−1)]
S38:RECOVER TRANSMISSION TIMING (Timing = Timing+P = 1)

S33:OBTAIN MSE AT Timing = 1
AND STORE IN MSE_old

CONTINUED FROM
UPPER RIGHT PART

REPEAT

S39:STANDBY FRAME
(500 FRAMES)

TIME POINT OF
Timing = 0

TRANSMIT WITH
TIMING OF LAST TIME
(Timing = 1)

S34:TRANSMIT WITH TRANSMISSION TIMING SHIFTED BY P
(Timing = Timing+P = 2)
* AS IT IS MSE_new < MSE_old IN THE LAST
DETERMINATION, P IS 1

TOTAL SHIFT WIDTH = 1

TOTAL SHIFT
WIDTH = 2

EP 1 320 201 A1

28

F I G.  1 6

```
                        START
                          │
                          ▼
        ┌──────────────────────────────────┐
        │  STANDBY FRAME:= 500 FRAMES       │──── S41
        └──────────────────────────────────┘
                          │
                          ▼
        ┌──────────────────────────────────┐
        │          P := 1                   │──── S42
        │          Timing := 0              │
        └──────────────────────────────────┘
                          │
          ┌──────────────►│
          │               ▼
          │   ┌──────────────────────────────────────────────┐
          │   │ OBTAIN MEAN SQUARE ERROR OVER 40 FRAMES       │──── S43
          │   │ MSE_old:= AVERAGE OF MEAN SQUARE ERRORS       │
          │   └──────────────────────────────────────────────┘
          │               │
          │               ▼
          │   ┌──────────────────────────────────────────────┐
          │   │ Timing := Timing + P                          │──── S44
          │   │ /* SHIFT TRANSMISSION TIMING*/                │
          │   └──────────────────────────────────────────────┘
          │               │
          │               ▼
          │   ┌──────────────────────────────────────────────┐
          │   │ OBTAIN MEAN SQUARE ERROR OVER 40 FRAMES       │──── S45
          │   │ MSE_new:= AVERAGE OF MEAN SQUARE ERRORS       │
          │   └──────────────────────────────────────────────┘
          │               │
          │             S46│
          │               ▼
          │          ╱──────────────╲          NO
          │         ╱ MSE_new < MSE_old?╲───────────────┐
          │         ╲                 ╱                  │
          │          ╲──────────────╱                    ▼
          │               │ YES          ┌──────────────────────────────┐
          │               │              │      P := P × (−1)            │──── S47
          │               │              └──────────────────────────────┘
          │               │                             │
          │               │                             ▼
          │               │        ┌──────────────────────────────────────────────┐
          │               │        │ Timing := Timing + P                          │──── S48
          │               │        │ /* RECOVER ORIGINAL TRANSMISSION TIMING*/     │
          │               │        └──────────────────────────────────────────────┘
          │               │                             │
          │               │◄────────────────────────────┘
          │               ▼
          │   ┌──────────────────────────────────┐
          │   │   WAIT FOR THE STANDBY FRAMES     │──── S49
          │   └──────────────────────────────────┘
          │               │
          └───────────────┘
```

# F I G. 1 7

TRANSMIT AT Timing = 0 CONTINUOUSLY OVER 40 FRAMES, OBTAIN MSEs OF 40 FRAMES AND STORE AVERAGE VALUE IN MSE_old

TRANSMIT AT Timing = 0 CONTINUOUSLY OVER 40 FRAMES, OBTAIN MSEs OF 40 FRAMES AND STORE AVERAGE VALUE IN MSE_new

40 FRAMES

40 FRAMES

S43:OBTAIN MSE AT Timing = 0

RECEPTION POSITION AT Timing = 0

S45:OBTAIN MSE AT Timing = 1

COMPARE MSE_old AND MSE_new AS FLOW CHART 2. REPEAT THEREAFTER

TIME POINT OF Timing = 0

S44:TRANSMIT WITH TRANSMISSION TIMING SHIFTED BY P (Timing = Timing+P = 1)

TOTAL SHIFT WIDTH = 1

S42:INITIALIZATION
·P = 1
·SET TRANSMISSION TIMING TO 0
(Timing = 0) AND TRANSMIT

F I G. 1 8

```
                          START
                            │
                            ▼
              ┌──────────────────────────────┐
              │  STANDBY FRAME := 500 FRAMES  │──── S51
              └──────────────────────────────┘
                            │
                            ▼
              ┌──────────────────────────────┐
              │          P := 1              │──── S52
              │        Timing := 0           │
              └──────────────────────────────┘
                            │
       ┌────────────────────┤
       │                    ▼
       │  ┌────────────────────────────────────────────┐
       │  │ OBTAIN MEAN SQUARE ERROR OVER 40 FRAMES     │──── S53
       │  │ MSE_old := AVERAGE OF MEAN SQUARE ERRORS    │
       │  └────────────────────────────────────────────┘
       │                    │
       │                    ▼
       │  ┌────────────────────────────────────────────┐
       │  │ Timing := Timing + P                        │──── S54
       │  │ /* SHIFT TRANSMISSION TIMING*/              │
       │  └────────────────────────────────────────────┘
       │                    │
       │                    ▼
       │  ┌────────────────────────────────────────────┐
       │  │         WAIT FOR 10 FRAMES                  │──── S55
       │  └────────────────────────────────────────────┘
       │                    │
       │                    ▼
       │  ┌────────────────────────────────────────────┐
       │  │ OBTAIN MEAN SQUARE ERROR OVER 40 FRAMES     │──── S56
       │  │ MSE_new := AVERAGE OF MEAN SQUARE ERRORS    │
       │  └────────────────────────────────────────────┘
       │                    │
       │                    ▼         S57
       │              ◇─────────────────◇    NO
       │              │ MSE_new < MSE_old ?├───────────┐
       │              ◇─────────────────◇            │
       │                    │ YES                      ▼
       │                    │           ┌──────────────────────────┐
       │                    │           │      P := P × (−1)        │──── S58
       │                    │           └──────────────────────────┘
       │                    │                         │
       │                    │                         ▼
       │                    │           ┌──────────────────────────────────────────┐
       │                    │           │ Timing := Timing + P                      │──── S59
       │                    │           │ /* RECOVER ORIGINAL TRANSMISSION TIMING*/ │
       │                    │           └──────────────────────────────────────────┘
       │                    │◄────────────────────────┘
       │                    ▼
       │  ┌────────────────────────────────────────────┐
       │  │        WAIT FOR THE STANDBY FRAMES          │──── S60
       │  └────────────────────────────────────────────┘
       └────────────────────┘
```

# FIG. 19

TRANSMIT AT Timing = 0 CONTINUOUSLY OVER 40 FRAMES, OBTAIN MSEs OF 40 FRAMES AND STORE AVERAGE VALUE IN MSE_old

S55:STANDBY FRAME (10 FRAMES)

←---------------- 40 FRAMES ----------------→×←-------------

S53:OBTAIN MSE AT Timing = 0

RECEPTION POSITION: AT Timing = 0

CONTINUED TO THE LOWER LEFT PART

S52:INITIALIZATION
・P = 1
・SET TRANSMISSION TIMING TO 0 (Timing = 0) AND TRANSMIT

TRANSMIT AT Timing = 0 CONTINUOUSLY OVER 40 FRAMES, OBTAIN MSEs OF 40 FRAMES AND STORE AVERAGE VALUE IN MSE_new

S54:TRANSMIT WITH TRANSMISSION TIMING SHIFTED BY P (Timing = Timing+P = 1)

←-----×---------- 40 FRAMES ----------------→

OBTAIN MSE AT Timing = 1

CONTINUED FROM UPPER RIGHT PART

TIME POINT OF Timing = 0

S54:TRANSMIT WITH TRANSMISSION TIMING SHIFTED BY P (Timing = Timing+P = 1)

COMPARE MSE_old AND MSE_new AS FLOW CHART 2. REPEAT THEREAFTER

TOTAL SHIFT WIDTH = 1

EP 1 320 201 A1

# F I G. 2 0

EP 1 320 201 A1

A/D    3

A/D    4

1

2   x(t)

6

7

w(t)

8

y(t)

ARRAY OUTPUT

REFERENCE
CLOCK

5

10

WEIGHT
CONTROL UNIT

9
−    +

ERROR SIGNAL (MSE)

REFERENCE SIGNAL:d(t)

F I G. 2 1

ARRAY OUTPUT OF USER 1

ARRAY OUTPUT OF USER 2

WEIGHT CONTROL UNIT

MSE1

MSE2

REFERENCE SIGNAL:d(t)

TRANSMISSION SIGNAL OF USER 1

TRANSMISSION SIGNAL OF USER 2

F I G. 2 2

x(t)

● : WHEN SAMPLED AT REFERENCE PHASE POINT

▲ : WHEN THERE IS SAMPLING ERROR

| INTERNATIONAL SEARCH REPORT | International application No. |
|---|---|
| | PCT/JP01/07230 |

**A. CLASSIFICATION OF SUBJECT MATTER**
    Int.Cl$^7$   H04B7/08, H04B7/26

According to International Patent Classification (IPC) or to both national classification and IPC

**B. FIELDS SEARCHED**

Minimum documentation searched (classification system followed by classification symbols)
    Int.Cl$^7$   H04B7/02-7/12, H04L1/02-1/06, H04B7/24-7/26, H04Q7/00-7/38

Documentation searched other than minimum documentation to the extent that such documents are included in the fields searched
    Jitsuyo Shinan Koho          1926-1996     Jitsuyo Shinan Toroku Koho   1996-2001
    Kokai Jitsuyo Shinan Koho    1971-2001     Toroku Jitsuyo Shinan Koho   1994-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-86972 A (NEC Corporation), 31 March, 1995 (31.03.95), Fig. 1   (Family: none) | 1-48 |
| A | JP 10-13262 A (NTT Ido Tsushinmo K.K.), 16 January, 1998 (16.01.98), Fig. 1   (Family: none) | 1-48 |
| A | JP 10-126138 A (NTT Ido Tsushinmo K.K.), 15 May, 1998 (15.05.98), Fig. 1   (Family: none) | 1-48 |
| A | JP 10-242739 A (Nippon Telegr. & Teleph. Corp. <NTT>), 11 September, 1998 (11.09.98), Fig. 1   (Family: none) | 1-48 |
| A | JP 11-289212 A (Toyota Central Research and Development Laboratories, Inc.), 19 October, 1999 (19.10.99), Fig. 1   (Family: none) | 1-48 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 November, 2001 (14.11.01) | 27 November, 2001 (27.11.01) |

| Name and mailing address of the ISA/ | Authorized officer |
|---|---|
| Japanese Patent Office | |
| Facsimile No. | Telephone No. |

Form PCT/ISA/210 (second sheet) (July 1992)